(19) Europäisches Patentamt
European Patent Office
Office européen des brevets

(11) **EP 4 622 271 A1**

(12) **EUROPEAN PATENT APPLICATION**
published in accordance with Art. 153(4) EPC

(43) Date of publication:
**24.09.2025 Bulletin 2025/39**

(21) Application number: **23892090.4**

(22) Date of filing: **20.11.2023**

(51) International Patent Classification (IPC):
*H04N 19/85* (2014.01)   *H04N 19/70* (2014.01)
*H04N 19/184* (2014.01)   *G06N 3/04* (2023.01)

(52) Cooperative Patent Classification (CPC):
**G06N 3/04; H04N 19/184; H04N 19/70; H04N 19/85**

(86) International application number:
**PCT/KR2023/018676**

(87) International publication number:
**WO 2024/107028 (23.05.2024 Gazette 2024/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.11.2022 US 202263426720 P**

(71) Applicant: **LG Electronics Inc.**
**Yeongdeungpo-gu**
**Seoul 07336 (KR)**

(72) Inventor: **TAN, Hendry**
**Seoul 06772 (KR)**

(74) Representative: **Mooser, Sebastian Thomas et al**
**Wuesthoff & Wuesthoff**
**Patentanwälte und Rechtsanwalt PartG mbB**
**Schweigerstraße 2**
**81541 München (DE)**

(54) **IMAGE ENCODING/DECODING METHOD, METHOD FOR TRANSMITTING BITSTREAM, AND RECORDING MEDIUM FOR STORING BITSTREAM**

(57)    Provided are an image encoding/decoding method, a method for transmitting a bitstream, and a computer-readable recording medium for storing a bitstream. The image decoding method according to the present disclosure comprises the steps of: acquiring a supplemental enhancement information (SEI) message for a neural-network post-filter (NNPF) to be applied to the current picture; on the basis of the SEI message for the NNPF being applied to the current picture, determining at least one neural network, capable of being used as a post-processing filter, on the basis of at least one neural-network post-filter characteristics (NNPFC) SEI message included in the SEI message for the NNPF; and determining, on the basis of at least one neural-network post-filter activation (NNPFA) SEI message included in the SEI message for the NNPF, whether to activate a target neural network post-processing filter applicable to the current picture, wherein formatting information and objective information included in the NNPFC SEI message may be determined on the basis that the NNPFC SEI message includes a base neural network post-processing filter.

FIG. 5

**Description**

[Technical Field]

The present disclosure relates to a method for image encoding/decoding, a method for transmitting a bitstream, and a recording medium storing the bitstream, and more particularly, to a method of processing a neural-network post-processing filter.

[Background Art]

Recently, the demand for high-resolution and high-quality images, such as High Definition (HD) images and Ultra High Definition (UHD) images, has been increasing in various fields. As image data becomes high-resolution and high-quality, the amount of transmitted information or bit rate increases relative to conventional image data. The increase in transmitted information or bit rate amount leads to an increase in transmission costs and storage costs.

Accordingly, a high-efficiency image compression technology is required to effectively transmit, store, and reproduce the information of high-resolution and high-quality images.

[Disclosure]

[Technical Problem]

The present disclosure is to provide an image encoding/decoding method and apparatus with improved encoding/decoding efficiency.

The present disclosure is to provide a method of processing an NNPFC SEI message including a base neural-network post-processing filter.

The present disclosure is to provide a method of processing an NNPFC SEI message including an update neural-network post-processing filter.

The present disclosure is to clarify the meaning of the NNPFC SEI message in a certain case.

The present disclosure is to clearly provide formatting, purpose, and complexity information of the NNPFC SEI message.

The present disclosure is to clarify the processing when formatting and purpose information is not present.

The present disclosure is to provide a non-transitory computer-readable recording medium for storing a bitstream generated by the image encoding method according to the present disclosure.

The present disclosure is to provide a non-transitory computer-readable recording medium for storing a bitstream which is received and decoded by the image decoding apparatus according to the present disclosure and used for image reconstruction.

The present disclosure is to provide a method for transmitting a bitstream which is generated by the image encoding method according to the present disclosure.

The technical problems to be achieved in the present disclosure are not limited to the technical problems described above, and other technical problems not described may be clearly understood by those of ordinary skill in the art from the following descriptions.

[Technical Solution]

An image decoding method performed by an image decoding apparatus according to an embodiment of the present disclosure may comprise obtaining a supplemental enhancement information (SEI) message for a neural-network post-filter (NNPF) to be applied to a current picture, based on the SEI message for the NNPF being applied to the current picture, determining at least one neural-network that may be used as a post-processing filter based on at least one neural-network post-filter characteristics (NNPFC) SEI message included in the SEI message for the NNPF, and determining whether to activate a target neural-network post-processing filter that may be applied to the current picture, based on at least one neural-network post-filter activation (NNPFA) SEI message included in the SEI message for the NNPF, wherein formatting information and purpose information included in the NNPFC SEI message may be determined based on the NNPFC SEI message including a base neural-network post-processing filter.

An image encoding method performed by an image encoding apparatus according to an embodiment of the present disclosure may comprise encoding at least one neural-network that may be used as a post-processing filter into at least one neural-network post-filter characteristics (NNPFC) supplemental enhancement information (SEI) message, and encoding whether to activate a target neural-network post-processing filter that may be applied to a current picture into at least one neural-network post-filter activation (NNPFA) SEI message, wherein, based on the SEI message for the neural-network post-filter (NNPF) being applied to the current picture in an image decoding apparatus, formatting information and purpose information included in the NNPFC SEI message may be determined based on the NNPFC SEI message including a base neural-network post-processing filter.

According to another embodiment of the present disclosure, a computer-readable recording medium may store a bitstream generated by the image encoding method or apparatus of the present disclosure.

According to another embodiment of the present disclosure, a transmission method may transmit a bitstream generated by the image encoding method or apparatus of the present disclosure.

The features of the present disclosure briefly summarized above are merely exemplary embodiments described in detail below and are not intended to limit the range of the present disclosure.

[Advantageous Effects]

According to the present disclosure, an image encoding/decoding method and apparatus with improved encoding/decoding efficiency may be provided.

According to the present disclosure, the type of information present in the message may be determined based on the type of the NNPFC SEI message.

According to the present disclosure, a method of processing formatting and purpose information may be determined based on the type of the NNPFC SEI message.

According to the present disclosure, formatting and purpose information may be inferred based on an NNPFC SEI message including a base neural-network post-processing filter.

According to the present disclosure, a non-transitory computer-readable recording medium storing a bitstream generated by the image encoding method according to the present disclosure may be provided.

According to the present disclosure, a non-transitory computer-readable recording medium for storing a bitstream which is received and decoded by the image decoding apparatus according to the present disclosure and used for image reconstruction may be provided.

According to the present disclosure, a method of transmitting a bitstream generated by the image encoding method may be provided.

The effects obtainable from the present disclosure are not limited to the effects described above, and other effects not described may be clearly understood by those of ordinary skill in the art from the following descriptions.

[Description of Drawings]

FIG. 1 shows a schematic diagram of a video coding system to which an embodiment according to the present disclosure may be applied.

FIG. 2 shows a schematic diagram of an image encoding apparatus to which an embodiment according to the present disclosure may be applied.

FIG. 3 shows a schematic diagram of an image decoding apparatus to which an embodiment according to the present disclosure may be applied.

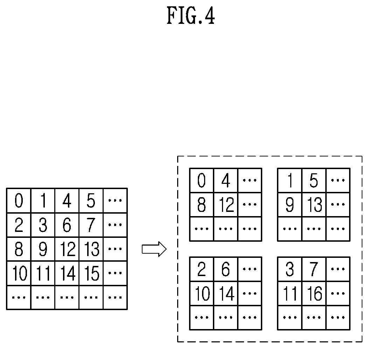

FIG. 4 is a diagram for illustrating an interleaved scheme for deriving a luma channel.

FIG. 5 is a flowchart for illustrating an image encoding method to which an embodiment according to the present disclosure may be applied.

FIG. 6 is a flowchart for illustrating an image decoding method to which an embodiment according to the present disclosure may be applied.

FIG. 7 shows an exemplary diagram of a content streaming system to which an embodiment of the present disclosure may be applied.

[Mode for Invention]

Hereinafter, embodiments of the present disclosure will be described in detail by referring to the attached drawings for those of ordinary skill in the art to easily implement them. However, the present disclosure may be implemented in various different forms and is not limited to the embodiments described herein.

In describing embodiments of the present disclosure, detailed explanations of well-known configurations or functions are omitted when they are deemed to obscure the main point of the present disclosure. Additionally, parts irrelevant to the description of the present disclosure are omitted from the drawings, and similar reference numerals have been assigned to similar parts.

In the present disclosure, when a certain component is described as being "connected," "coupled," or "linked" to another component, this may include not only a direct connection but also an indirect connection where another component may exist in the middle. Additionally, when a certain component is described as "including" or "having" another component, this means that, unless explicitly stated otherwise, it does not exclude other components but may further include additional components.

In the present disclosure, the terms first, second, etc. are used solely for the purpose of distinguishing one component from another and do not limit the order or importance of the components unless explicitly stated otherwise. Accordingly, a first component in one embodiment may be referred to as a second component in another embodiment, and similarly, a second component in one embodiment may be referred to as a first component in another embodiment within the range of the present disclosure.

In the present disclosure, distinguishable components are described to clearly explain their respective characteristics and do not necessarily mean that the components are separate. In other words, a plurality of components may be integrated into a single hardware or software unit, or a single component may be distributed across multiple hardware or software units. Accordingly, without explicitly describing them, such integrated or distributed embodiments are also included in the range of the present disclosure.

In the present disclosure, the components described in various embodiments do not necessarily mean essential components, and some may be optional components. Accordingly, embodiments composed of a subset of the components described in one embodiment are also included in the range of the present disclosure. Additionally, embodiments that include additional components beyond those described in various embodiments are also included in the range of the present disclosure.

The present disclosure relates to the encoding and decoding of images, and the terms used herein may have the ordinary meanings commonly used in the field of technology to which this disclosure belongs unless the terms are newly defined in the present disclosure.

In the present disclosure, "picture" generally refers to a unit representing a single image at a specific point in time. A slice/tile is an encoding unit that constitutes a part of a picture, and a picture may be composed of one or more slices/tiles. Additionally, a slice/tile may include one or more coding tree units (CTUs).

In the present disclosure, "pixel" or "pel" may refer to the smallest unit that constitutes one picture (or image). Additionally, the term "sample" may be used as a corresponding term for a pixel. A sample may generally represent a pixel or the value of a pixel and may indicate only the pixel/pixel value of a luma component or only the pixel/pixel value of a chroma component.

In the present disclosure, "unit" may refer to a basic unit of image processing. A unit may include at least one of a specific area of a picture or information related to the area. Depending on the context, the term "unit" may be used interchangeably with "sample array," "block," "area," etc. In general, an M×N block may include a set (or array) of samples (or a sample array) or a set (or array) of transform coefficients, consisting of M columns and N rows.

In the present disclosure, the term "current block" may refer to one of "current coding block", "current coding unit", "encoding target block", "decoding target block", or "processing target block". When prediction is performed, "current block" may refer to "current prediction block" or "prediction target block". When transform (inverse transform)/quantization (dequantization) is performed, "current block" may refer to "current transform block" or "transform target block". When filtering is performed, "current block" may refer to "filtering target block".

In the present disclosure, unless explicitly stated as a chroma block, the term "current block" may refer to a block that includes both a luma component block and a chroma component block or may refer to "the luma block of the current block". The luma component block of the current block may be explicitly expressed with terms such as "luma block" or "current luma block", clearly indicating it as a luma component block. Additionally, the chroma component block of the current block may be explicitly expressed with terms such as "chroma block" or "current chroma block", clearly indicating it as a chroma component block.

In the present disclosure, "/" and "," may refer to "and/or". For example, "A/B" and "A, B" may refer to "A and/or B". Additionally, "A/B/C" and "A, B, C" may refer to "at least one of A, B, and/or C".

In the present disclosure, "or" may refer to "and/or". For example, "A or B" may mean 1) "A" only, 2) "B" only, or 3) "A and B." Alternatively, in the present disclosure, "or" may also mean "additionally or alternatively".

## Overview of the video coding system

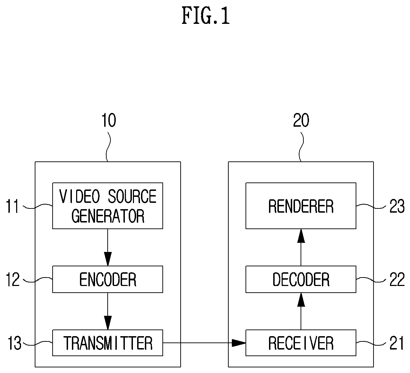

FIG. 1 shows a schematic diagram of a video coding system to which an embodiment according to the present disclosure may be applied.

A video coding system according to an embodiment may include an encoder apparatus 10 and a decoder apparatus 20. The encoder apparatus 10 may transmit encoded video and/or image information or data to the decoder apparatus 20 through a digital storage medium or network in the form of a file or streaming.

An encoder apparatus 10 according to an embodiment may include a video source generator 11, an encoder 12, and a transmitter 13. A decoder apparatus 20 according to an embodiment may include a receiver 21, a decoder 22, and a renderer 23. The encoder 12 may be referred to as a video/image encoder, and the decoder 22 may be referred to as a video/image decoder. The transmitter 13 may be included in the encoder 12. The receiver 21 may be included in the decoder 22. The renderer 23 may include a display, and the display may be configured as a separate device or external component.

The video source generator 11 may obtain a video/an image through a process of capturing, synthesizing, or generating a video/an image. The video source generator 11 may include a video/an image capture device and/or a video/an image generation device. The video/image capture device may include, for example, one or more cameras, a video/an image archive containing previously captured video/image, etc. The video/image generation device includes, for example, a computer, tablet, or smartphone, and may (electronically) generate a video/an image. For example, virtual video/image may be generated through a computer, etc., and in this case, the video/image capturing process may be replaced by the process of generating related data.

The encoder 12 may encode the input video/image. The encoder 12 may perform a series of procedures such as prediction, transform, quantization, etc. for compression and encoding efficiency. The encoder 12 may output the encoded data (encoded video/image information) in the form of a bitstream.

The transmitter 13 may obtain the encoded video/image information or data output in the form of a bitstream and transmit it to the receiver 21 of the decoder apparatus 20 or another external object through a digital storage medium or network, in the form of a file or streaming. The digital storage medium may include various storage media such as USB, SD, CD, DVD, Blu-ray, HDD, SSD, etc. The transmitter 13 may include an element for generating media files through a predetermined file format and element for transmission over broadcast/communication networks. The transmitter 13 may be provided as a separate transmission apparatus from the encoder 12, in which case the transmission apparatus may include at least one processor for obtaining the encoded video/image information or data in bitstream form and a transmitter for delivering it in the form of file or streaming. The receiver 21 may extract/receive the bitstream from the storage medium or network and transmit it to decoder 22.

The decoder 22 may decode the video/image by performing a series of procedures such as dequantization, inverse transform, prediction, etc. corresponding to the operations of the encoder 12.

The renderer 23 may render the decoded video/image. The rendered video/image may be displayed through the display unit.

## Overview of the image encoding apparatus

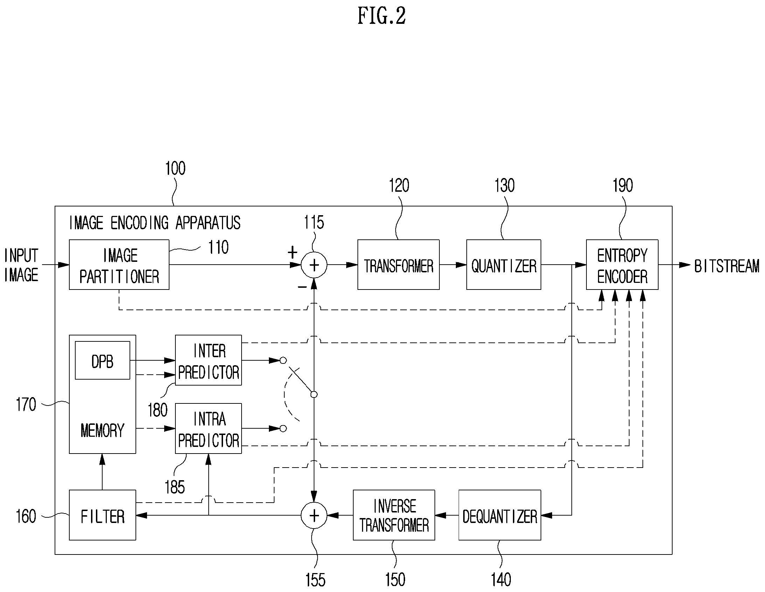

FIG. 2 shows a schematic diagram of an image encoding apparatus to which an embodiment according to the present disclosure may be applied.

As described in FIG. 2, the image encoding apparatus 100 may include an image partitioner 110, a subtractor 115, a transformer 120, a quantizer 130, a dequantizer 140, an inverse transformer 150, an adder 155, a filter 160, a memory 170, an inter predictor 180, an intra predictor 185, and an entropy encoder 190. The inter predictor 180 and the intra predictor 185 may collectively be referred to as a "predictor." The transformer 120, the quantizer 130, the dequantizer 140, and the inverse transformer 150 may be included in a residual processor. The residual processor may further include the subtractor 115.

All or at least some of the multiple components constituting the image encoding apparatus 100 may be implemented as a single hardware component (i.e., an encoder or a processor), depending on the embodiment. Additionally, the memory 170 may include a decoded picture buffer (DPB) and may be implemented by a digital storage medium.

The image partitioner 110 may partition the input image (or picture, frame) input to the image encoding apparatus 100 into at least one processing unit. As an example, the processing unit may be referred to as a coding unit (CU). A coding unit may be obtained by recursively partitioning a coding tree unit (CTU) or a largest coding unit (LCU) according to a quad-tree, binary-tree, or ternary-tree (QT/BT/TT) structure. For example, a coding unit may be divided into a deeper-depth coding unit based on a quad-tree structure, a binary-tree structure, and/or a ternary-tree structure. For partitioning a coding unit, the quad-tree structure may be applied first, followed by the binary-tree structure and/or the ternary-tree structure. The coding procedure according to the present disclosure may be performed based on the final coding unit, which is not further partitioned. The largest coding unit may be used directly as the final coding unit, or a deeper-depth coding unit obtained by partitioning the largest coding unit may be used as the final coding unit. Here, the coding procedure may include a procedure such as prediction, transform, and/or reconstruction, which will be described later. As another example, the processing unit for the coding procedure may be a prediction unit (PU) or a transform unit (TU). The prediction unit and the transform unit may each be divided or partitioned from the final coding unit. The prediction unit may be a unit for sample prediction, and the transform unit may be a unit for deriving a transform coefficient and/or deriving a residual signal from a transform coefficient.

The predictor (inter predictor 180 or intra predictor 185) may perform prediction for a target block (current block) and generate a predicted block that includes prediction samples for the current block. The predictor may determine whether intra prediction or inter prediction is applied to the current block or coding unit (CU). The predictor may generate various information related to the prediction of the current block and transmit it to the entropy encoder 190. The prediction-related information may be encoded by the entropy encoder 190 and may be output in the form of a bitstream.

The intra predictor 185 may predict the current block by referring to samples within the current picture. The referenced samples may be located in the neighboring area of the current block or may be located farther away, depending on the intra prediction mode and/or intra prediction method. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes, depending on the granularity of the prediction direction. However, this is an example, and a greater or fewer number of directional prediction modes may be used depending on the configuration. The intra predictor 185 may also determine the prediction mode applied to the current block by using the prediction mode applied to neighboring block.

The inter predictor 180 may derive a predicted block for the current block based on a reference block (reference sample array) specified by a motion vector on a reference picture. To reduce the amount of motion information transmitted in the inter prediction mode, motion information may be predicted at the block, sub-block, or sample level based on the correlation of motion information between the neighboring block and the current block. The motion information may include a motion vector and a reference picture index. The motion information may further include information on the inter prediction direction (i.e. L0 prediction, L1 prediction, Bi prediction, etc.). In inter prediction, neighboring block may include spatial neighboring block present within the current picture and temporal neighboring block present in the reference picture. The reference picture containing the reference block and the reference picture containing the temporal neighboring block may be the same or different. The temporal neighboring block may be referred to as a collocated reference block or a collocated coding unit (colCU). The reference picture containing the temporal neighboring block may be referred to as a collocated picture (colPic). For example, the inter predictor 180 may construct a motion information candidate list based on neighboring blocks and generate information indicating which candidate is used to derive the motion vector and/or reference picture index of the current block. Inter prediction may be performed based on various prediction modes, and for example, in the skip mode and merge mode, the inter predictor 180 may use the motion information of neighboring block as the motion information of the current block. In skip mode, unlike merge mode, residual signal may not be transmitted. In the motion vector prediction (MVP) mode, the motion vector of a neighboring block may be used as a motion vector predictor, and the motion vector of the current block may be signaled by encoding the motion vector difference and an indicator for the motion vector predictor. The motion vector difference may refer to the difference between the motion vector of the current block and the motion vector predictor.

The predictor may generate a prediction signal based on various prediction methods and/or prediction techniques described later. For example, the predictor may apply intra prediction or inter prediction for the prediction of the current block, and it may also apply both intra prediction and inter prediction simultaneously. The prediction method that applies intra prediction and inter prediction simultaneously for the prediction of the current block may be referred to as combined inter and intra prediction (CIIP). Additionally, the predictor may perform intra block copy (IBC) for the prediction of the current block. Intra block copy may be used, for example, for screen content coding (SCC), etc. in applications such as game content image/video coding. IBC is a method of predicting the current block by using a pre-reconstructed reference block within the current picture, located at a predetermined distance from the current block. When IBC is applied, the position of the reference block within the current picture may be encoded as a vector (block vector) corresponding to the predetermined distance. IBC basically performs prediction within the current picture, but since it derives a reference block within the current picture, it may operate similarly to inter prediction. In other words, IBC may use at least one of the inter prediction methods described in the present disclosure.

The prediction signal generated by the predictor may be used to generate a reconstructed signal or to generate a residual signal. The subtractor 115 may generate a residual signal (residual block, residual sample array) by subtracting the prediction signal (predicted block, predicted sample array) output from the predictor from the input image signal (original block, original sample array). The generated residual signal may be transmitted to the transformer 120.

The transformer 120 may generate transform coefficients by applying a transform method to the residual signal. For example, the transform method may include at least one of Discrete Cosine Transform (DCT), Discrete Sine Transform (DST), Karhunen-Loeve Transform (KLT), Graph-Based Transform (GBT), or Conditionally Non-linear Transform (CNT). Here, GBT refers to a transform obtained from a graph when the relationship information between pixels is represented as a graph. CNT refers to a transform obtained based on a prediction signal generated by using all previously reconstructed pixels. The transform process may be applied to a pixel block of the same square size or to a non-square variable-sized block.

The quantizer 130 may quantize the transform coefficients and transmit them to the entropy encoder 190. The entropy encoder 190 may encode the quantized signal (information on the quantized transform coefficients) and output it as a bitstream. The information on the quantized transform coefficients may be referred to as residual information. The quantizer 130 may rearrange the block-shaped quantized transform coefficients into a one-dimensional vector based on a coefficient scan order and may generate the information on the quantized transform coefficients based on the one-dimensional vector of quantized transform coefficients.

The entropy encoder 190 may perform various encoding methods, such as exponential Golomb, context-adaptive variable length coding (CAVLC), or context-adaptive binary arithmetic coding (CABAC). The entropy encoder 190 may encode not only the quantized transform coefficients but also information necessary for video/image reconstruction (i.e., values of syntax elements) either together or separately with the quantized transform coefficients. The encoded information (i.e., encoded video/image information) may be transmitted or stored in the form of a bitstream in network abstraction layer (NAL) unit. The video/image information may further include information on various parameter sets, such as an adaptation parameter set (APS), a picture parameter set (PPS), a sequence parameter set (SPS), or a video parameter set (VPS). Additionally, the video/image information may further include general constraint information. The signaling information, transmitted information, and/or syntax elements described in the present disclosure may be included in the bitstream by being encoded through the above-described encoding process.

The bitstream may be transmitted through a network or stored in a digital storage medium. Here, the network may include a broadcast network and/or a communication network, etc., and the digital storage medium may include various storage media such as USB, SD, CD, DVD, Blu-ray, HDD, SSD, etc. A transmitter (not shown) for transmitting the signal output from the entropy encoder 190 and/or a storage unit (not shown) for storing the signal may be provided as an internal/external element of the image encoding apparatus 100, or the transmitter may be configured as a component of the entropy encoder 190.

The quantized transform coefficients output from the quantizer 130 may be used to generate a residual signal. For example, a residual signal (residual block or residual samples) may be reconstructed by applying dequantization and inverse transform to the quantized transform coefficients through the dequantizer 140 and the inverse transformer 150.

The adder 155 may generate a reconstructed signal (reconstructed picture, reconstructed block, or reconstructed sample array) by adding the reconstructed residual signal to the prediction signal output from the inter predictor 180 or the intra predictor 185. When there is no residual for the target block, such as when the skip mode is applied, the predicted block may be used as the reconstructed block. The adder 155 may be referred to as a reconstructor or a reconstructed block generator. The generated reconstructed signal may be used for intra prediction of the next target block within the current picture and, as described later, may also be used for inter prediction of the next picture after undergoing filtering.

The filter 160 may apply filtering to the reconstructed signal to enhance subjective/objective quality. For example, the filter 160 may apply various filtering methods to the reconstructed picture to generate a modified reconstructed picture, and the modified reconstructed picture may be stored in the memory 170, specifically in the DPB of the memory 170. The various filtering methods may include, for example, deblocking filtering, sample adaptive offset, adaptive loop filter, bilateral filter, etc. The filter 160 may generate various filtering-related information, as described later in the explanations of each filtering method, and may transmit it to the entropy encoder 190. The filtering-related information may be encoded by the entropy encoder 190 and output in the form of a bitstream.

The modified reconstructed picture transmitted to the memory 170 may be used as a reference picture in the inter predictor 180. When inter prediction is applied in this case, the image encoding apparatus 100 may avoid prediction mismatches between the image encoding apparatus 100 and the image decoding apparatus, and may improve encoding efficiency.

The DPB in the memory 170 may store the modified reconstructed picture for use as a reference picture in the inter predictor 180. The memory 170 may store the motion information of a block in the current picture where motion information has been derived (or encoded) and/or the motion information of blocks in already reconstructed pictures. The stored motion information may be transmitted to the inter predictor 180 for use as motion information of spatial neighboring block or temporal neighboring block. The memory 170 may store the reconstructed samples of reconstructed blocks in the current picture and transmit them to the intra predictor 185.

## Overview of the image decoding apparatus

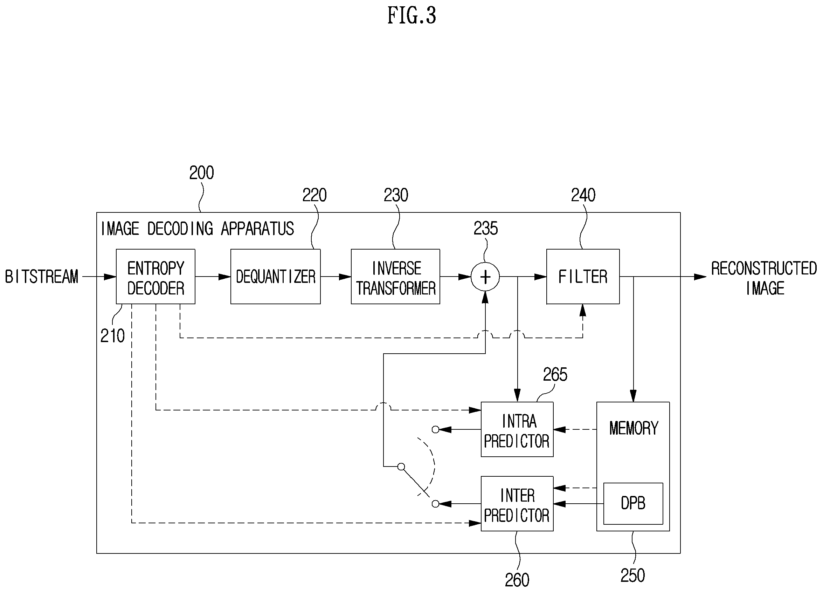

FIG. 3 shows a schematic diagram of an image decoding apparatus to which an embodiment according to the present disclosure may be applied.

As shown in FIG. 3, the image decoding apparatus 200 may include an entropy decoder 210, a dequantizer 220, an inverse transformer 230, an adder 235, a filter 240, a memory 250, an inter predictor 260, and an intra predictor 265. The inter predictor 260 and the intra predictor 265 may collectively be referred to as a "predictor". The dequantizer 220 and the inverse transformer 230 may be included in a residual processor.

All or at least some of the multiple components constituting the image decoding apparatus 200 may be implemented as a single hardware component (i.e., a decoder or a processor), depending on the embodiment. Additionally, the memory 170 may include a DPB and may be implemented by a digital storage medium.

The image decoding apparatus 200, which receives a bitstream containing video/image information, may perform a process corresponding to the process performed by the image encoding apparatus 100 in FIG. 2 to reconstruct the image. For example, the image decoding apparatus 200 may perform decoding using the processing unit applied in the image encoding apparatus. Therefore, the processing unit for decoding may be, for example, a coding unit. The coding unit may be a coding tree unit or may be obtained by splitting a largest coding unit. Additionally, the reconstructed image signal decoded and output through the image decoding apparatus 200 may be played back through a playback device (not shown).

The image decoding apparatus 200 may receive a signal output from the image encoding apparatus in FIG. 2 in the form of a bitstream. The received signal may be decoded through the entropy decoder 210. For example, the entropy decoder 210 may parse the bitstream to extract the information necessary for image reconstruction (or picture reconstruction) (i.e., video/image information). The video/image information may further include information on various parameter sets, such as an adaptation parameter set (APS), a picture parameter set (PPS), a sequence parameter set (SPS), or a video parameter set (VPS). Additionally, the video/image information may further include general constraint information. The image decoding apparatus may additionally use information on the parameter set and/or the general constraint information to decode the image. The signaling information, received information, and/or syntax elements described in the present disclosure may be obtained from the bitstream by being decoded through the decoding process. For example, the entropy decoder 210 may decode the information in the bitstream based on coding methods such as exponential Golomb encoding, CAVLC, or CABAC, and may output a syntax element value necessary for image reconstruction and quantized values of a transform coefficient related to a residual. More specifically, the CABAC entropy decoding method may receive a bin corresponding to a syntax element in the bitstream, may determine a context model using the information of the decoding target syntax element, the decoding information of neighboring block and the decoding target block, or information of previously decoded symbol/bin, may predict the probability of bin occurrence according to the determined context model, and may perform arithmetic decoding of the bin to generate a symbol corresponding to each syntax element. In this case, the CABAC entropy decoding method may update the context model for the next symbol/bin context model using the decoded symbol/bin information after determining the context model. Among the decoded information from the entropy decoder 210, the prediction-related information may be provided to the predictor (inter predictor 260 and intra predictor 265), and the residual value which is entropy decoded by the entropy decoder 210, in other words, the quantized transform coefficients and related parameter information, may be input to the dequantizer 220. Additionally, among the decoded information from the entropy decoder 210, filtering-related information may be provided to the filter 240. Meanwhile, a receiver (not shown) that receives the signal output from the image encoding apparatus may be additionally configured as an internal/external element of the image decoding apparatus 200, or the receiver may be configured as a component of the entropy decoder 210.

Meanwhile, the image decoding apparatus according to the present disclosure may also be referred to as a video/image/picture decoding apparatus. The image decoding apparatus may include an information decoder (video/image/picture information decoder) and/or a sample decoder (video/image/picture sample decoder). The information decoder may include the entropy decoder 210, and the sample decoder may include at least one of the dequantizer 220, the inverse transformer 230, the adder 235, the filter 240, the memory 250, the inter predictor 260, or the intra predictor 265.

The dequantizer 220 may dequantize the quantized transform coefficients and output the transform coefficients. The dequantizer 220 may rearrange the quantized transform coefficients into a two-dimensional block. In this case, the rearrangement may be performed based on the coefficient scan order applied in the image encoding apparatus. The dequantizer 220 may perform dequantization on the quantized transform coefficients using quantization parameter (i.e., quantization step size information) and may obtain transform coefficients.

The inverse transformer 230 may perform an inverse transform on the transform coefficients to obtain a residual signal (residual block, or residual sample array).

The predictor may perform prediction for the current block and generate a predicted block that includes prediction samples for the current block. The predictor may determine whether intra prediction or inter prediction is applied to the current block based on the prediction-related information output from the entropy decoder 210 and may determine a specific intra/inter prediction mode (prediction method) .

That the predictor may generate a prediction signal based on various prediction methods (techniques) which will be described later is the same as described in the explanation of the predictor in the image encoding apparatus 100.

The intra predictor 265 may predict the current block by referring to samples within the current picture. The explanation of the intra predictor 185 may also be applied in the same way to the intra predictor 265.

The inter predictor 260 may derive a predicted block for the current block based on a reference block (reference sample array) specified by a motion vector on a reference picture. In this case, to reduce the amount of motion information transmitted in the inter prediction mode, motion information may be predicted at the block, sub-block, or sample level based on the correlation of motion information between the neighboring block and the current block. The motion information may include a motion vector and a reference picture index. The motion information may further include information on the inter prediction direction (i.e., L0 prediction, L1 prediction, Bi prediction, etc.). In inter prediction, a neighboring block may include spatial neighboring block within the current picture and temporal neighboring block in the reference picture. For example, the inter predictor 260 may construct a motion information candidate list based on neighboring blocks and derive the motion vector and/or reference picture index of the current block based on the received candidate selection information. Inter prediction may be performed based on various prediction modes (methods), and the prediction-related information may include information indicating the inter prediction mode (method) applied to the current block.

The adder 235 may generate a reconstructed signal (reconstructed picture, reconstructed block, reconstructed sample array) by adding the obtained residual signal to the prediction signal (predicted block, predicted sample array) output from the predictor (including the inter predictor 260 and/or the intra predictor 265). When there is no residual for the target block, such as when the skip mode is applied, the predicted block may be used as the reconstructed block. The explanation of the adder 155 may also be applied in the same way to the adder 235. The adder 235 may be referred to as a reconstructor or a reconstructed block generator. The generated reconstructed signal may be used for intra prediction of the next target block within the current picture and as described later, may also be used for inter prediction of the next picture after undergoing filtering.

The filter 240 may apply filtering to the reconstructed signal to enhance subjective/objective quality. For example, the filter 240 may apply various filtering methods to the reconstructed picture to generate a modified reconstructed picture, and the modified reconstructed picture may be stored in the memory 250, specifically in the DPB of the memory 250. The various filtering methods may include, for example, deblocking filtering, sample adaptive offset, adaptive loop filter, bilateral filter, etc.

The (modified) reconstructed picture stored in the DPB of the memory 250 may be used as a reference picture in the inter predictor 260. The memory 250 may store the motion information of a block in the current picture where motion information has been derived (or decoded) and/or the motion information of blocks in already reconstructed picture. The stored motion information may be transmitted to the inter predictor 260 to be used as motion information of a spatial neighboring block or a temporal neighboring block. The memory 250 may store the reconstructed samples of reconstructed blocks in the current picture and transmit them to the intra predictor 265.

In this specification, the embodiments described for the filter 160, the inter predictor 180, and the intra predictor 185 of the image encoding apparatus 100 may be applied in the same or corresponding manner to the filter 240, the inter predictor 260, and the intra predictor 265 of the image decoding apparatus 200.

**Neural-network post-filter characteristics (NNPFC)**

The combination of Table 1 and Table 2 represents the NNPFC syntax structure.

[Table 1]

| nn_post_filter_characteristics( payloadSize ) { | Descriptor |
|---|---|
| nnpfc_id | ue(v) |
| nnpfc_mode_idc | ue(v) |
| if( nnpfc_mode_idc == 1 ) { | |
| while( !byte_aligned( ) ) | |
| nnpfc_reserved_zero_bit_a | u(1) |
| nupfc_tag_uri | st(v) |
| nnpfc_uri | st(v) |
| } | |
| nnpfc_formatting_and_purpose_flag | u(1) |
| if( nnpfc_formatting_and_purpose_flag ) { | |
| nnpfc_ purpose | ue(v) |
| /* input and output formatting */ | |
| if( nnpfc_purpose = = 2 \|\| nnpfc_purpose = = 4 ) | |
| nnpfc_out_sub_c_flag | u(1) |
| else if( nnpfc_purpose == 3 \|\| nnpfc_purpose == 4 ) { | |
| nnpfc_pic_width_in_luma_samples | ue(v) |
| nnpfc_pic_height_in_luma_samples | ue(v) |

(continued)

| | |
|---|---|
| } | |
| else if( nnpfc_purpose == 5 ) { | |
| nnpfc_num_input_pics_minus2 | ue(v) |
| for( i = 0; i <= nnpfc_num_input_pics_minus2; i++ ) | |
| nnpfc_interpolated_pics[ i ] | ue(v) |
| } | |
| nnpfc_component_last_flag | u(1) |
| nnpfc_inp_format_idc | ue(v) |
| if( nnpfc_inp_format ide = = 1 ) | |
| nnpfc_inp_tensor_bitdepth_minus8 | ue(v) |
| nnpfc_inp_order_idc | ue(v) |
| nnpfc_auxiliary_inp_idc | ue(v) |
| nnpfc_separate_colour_description_present_flag | u(1) |
| if( nnpfc_separate_colour_description_present_flag ) { | |
| nnpfc_colour_primaries | u(8) |
| nnpfc_transfer_characteristics | u(8) |
| nnpfc_matrix_coeffs | u(8) |
| } | |
| nnpfc_out_format_idc | ue(v) |
| if( nnpfc_out_format_idc = = 1 ) | |
| nnpfc_out_tensor_bitdepth_minus8 | ue(v) |

[Table 2]

| | |
|---|---|
| nnpfc_out_order_idc | ue(v) |
| nnpfc_constant_patch_size_flag | u(1) |
| nnpfc_patch_width_minus1 | ue(v) |
| nnpfc_patch_height_minus1 | ue(v) |
| nnpfc_overlap | ue(v) |
| nnpfc_padding_type | ue(v) |
| if( nnpfc_padding_type = = 4 ) { | |
| nnpfc_luma_padding_val | ue(v) |
| nnpfc_cb_padding_val | ue(v) |
| nnpfc_cr_padding_val | ue(v) |
| } | |
| nnpfc_complexity_info_present_flag | ue(v) |
| if( nnpfc_complexity_info_present_flag { | |
| nnpfc_parameter_type_idc | u(2) |
| if( nnpfc_parameter_type_idc != 2 ) | |
| nnpfc_log2_parameter_bit_length_minus3 | u(2) |
| nnpfc_num_parameters_idc | u(6) |

(continued)

| | |
|---|---|
| **nnpfc_num_kmac_operations_idc** | ue(v) |
| **nnpfc_total_kilobyte size** | ue(v) |
| } | |
| } | |
| /* ISO/IEC 15938-17 bitstream */ | |
| if( nnpfc_mode_idc = = 0 ) { | |
| while( !byte_aligned( ) ) | |
| **nnpfc_reserved_zero_bit_b** | u(1) |
| for( i = 0; more_data_in_payload( ); i++ ) | |
| **nnpfc_payload_byte**[ i ] | b(8) |
| } | |
| } | |

The NNPFC syntax structure of Table 1 and Table 2 may be signaled in the form of a supplemental enhancement information (SEI) message. An SEI message signaling the NNPFC syntax structure of Table 1 and Table 2 may be referred to as an NNPFC SEI message.

The NNPFC SEI message may specify a neural-network usable as a post-processing filter. The use of the specified post-processing filters for specific pictures may be indicated using neural-network post-filter activation SEI messages. Here, "post-processing filter" and "post-filter" may have the same meaning.

To use these SEI messages, the following variables may need to be defined.

- The width and height of a decoded output picture may be cropped in luma sample units, and the width and the height may be represented as CroppedWidth and CroppedHeight, respectively.
- CroppedYPic[idx], which is a luma sample array of the cropped decoded output pictures, and CroppedCbPic[idx] and CroppedCrPic[idx], which are chroma sample arrays, may be used as inputs to the post-processing filter when they are present, where idx may range from 0 to numInputPics - 1.
- BitDepthY may represent the bit depth of the luma sample array of the cropped decoded output pictures.
- BitDepthC may represent the bit depth of the chroma sample arrays (when present) of the cropped decoded output pictures.
- ChromaFormatIdc may represent a chroma format identifier.
- When the value of nnpfc_auxiliary_inp_idc is 1, the filtering strength control value StrengthControlVal shall be a real number in the range of 0 to 1.

The variables SubWidthC and SubHeightC may be derived from ChromaFormatIdc. More than or equal to two NNPFC SEI messages may exist for the same picture. When more than or equal to two NNPFC SEI messages with different nnpfc_id values are present or activated for the same picture, the NNPFC SEI messages may have either the same or different nnpfc_purpose and nnpfc_mode_idx values.

The nnpfc_id may include an identification number usable for identifying a post-processing filter. The nnpfc_id value shall exist in the range of 0 to $2^{32}$ - 2. The nnpfc_id value in the ranges of 256 to 511 and $2^{31}$ to $2^{32}$ - 2 may be reserved for future use. Decoders shall ignore an NNPFC SEI message with an nnpfc_id in the range of 256 to 511 or $2^{31}$ to $2^{32}$ - 2.

When an NNPFC SEI message is the first NNPFC SEI message in decoding order within the current coded layer video sequence (CLVS) having a specific nnpfc_id value, the following may apply.

- The SEI message may represent a base post-processing filter.
- The SEI message may be associated, in output order, with the currently decoded picture and all subsequently decoded pictures of the current layer until the current CLVS ends.

An NNPFC SEI message may be a repetition of a previous NNPFC SEI message within the current CLVS in decoding order, and the following semantics may be applied under the assumption that the SEI message is the only NNPFC SEI message having the same content within the current CLVS.

When an NNPFC SEI message is not the first NNPFC SEI message in decoding order having a specific nnpfc_id value within the current CLVS, the following may apply.

- The SEI message may be associated with a current decoded picture and all subsequent decoded pictures of the current layer until the current CLVS or the end of the current CLVS, in output order, or may be associated with the next NNPFC SEI message having the specific nnpfc_id value within the current CLVS in output order.

When an NNPFC SEI message is the first NNPFC SEI message in decoding order with a specific nnpfc_id value within the current CLVS, a value of 1 for nnpfc_mode_idc may indicate that the base post-processing filter associated with the nnpfc_id value is a neural-network, and the neural-network may be a neural-network which is identified by a URI indicated by nnpfc_uri, using a format of being identified by a tag URI nnpfc_tag_uri.

When an NNPFC SEI message is not the first NNPFC SEI message in decoding order with a specific nnpfc_id value within the current CLVS, a value of 1 for nnpfc_mode_idc may indicate that an update to the base post-processing filter with the same nnpfc_id value is defined by a URI denoted by nnpfc_uri using a format identified by a tag URI nnpfc_tag_uri.

The value of nnpfc_mode_idc may be restricted to a range of 0 to 1 in the bitstream. A value in the range of 2 to 255 for nnpfc_mode_idc may be reserved for future use and may not be present in the bitstream. Decoders shall ignore an NNPFC SEI message having an nnpfc_mode_idc value in the range of 2 to 255. Values greater than 255 for nnpfc_mode_idc may not be present in the bitstream and may not be reserved for future use.

When the SEI message is the first NNPFC SEI message in decoding order having a specific nnpfc_id value within the current CLVS, the post-processing filter PostProcessingFilter() may be assigned to be the same as the base post-processing filter.

When the SEI message is not the first NNPFC SEI message in decoding order having a specific nnpfc_id value within the current CLVS, the post-processing filter PostProcessingFilter() may be obtained by applying the update defined by the SEI message to the base post-processing filter.

The updates are not cumulative, and rather, each update may be applied to the base post-processing filter which is a post-processing filter that is specified by the first NNPFC SEI message in decoding order having the specific nnpfc_id value within the current CLVS.

The nnpfc_reserved_zero_bit_a may be restricted to have a value equal to 0 due to a bitstream constraint. Decoders may be restricted to ignore NNPFC SEI messages in which the value of nnpfc_reserved_zero_bit_a is not 0.

The nnpfc_tag_uri may include a tag URI with syntax and semantics specified in IETF RFC 4151 identifying a neural-network used as a base post-processing filter or an update relative to the base post-processing filter using the nnpfc_id value specified by nnpfc_uri. By using nnpfc_tag_uri, the format of neural-network data specified by nnrpf_uri may be uniquely identified without a central registration authority. An nnpfc_tag_uri equal to "tag:iso.org,2023:15938-17" may indicate that the neural-network data identified by nnpfc_uri conforms to ISO/IEC 15938-17.

The nnpfc_uri may include an URI having syntax and semantics specified in IETF Internet Standard 66, which identifies a neural-network used as a base post-processing filter or an update to the base post-processing filter using the same nnpfc_id value.

A value of 1 for nnpfc_formatting_and_purpose_flag may indicate the presence of a syntax element related to filter purpose, input formatting, output formatting, and complexity. A value of 0 for nnpfc_formatting_and_purpose_flag may indicate the absence of a syntax element related to filter purpose, input formatting, output formatting, and complexity.

When the SEI message is the first NNPFC SEI message in decoding order having a specific nnpfc_id value within the current CLVS, the value of nnpfc_formatting_and_purpose_flag may be required to be equal to 1. When the SEI message is not the first NNPFC SEI message in decoding order having a specific nnpfc_id value within the current CLVS, the value of nnpfc_formatting_and_purpose_flag may be required to be equal to 0.

The nnpfc_purpose may indicate the purpose of the post-processing filter as specified in Table 3.

The value of nnpfc_purpose shall exist in the range of 0 to 5 due to a bitstream constraint. A value from 6 to 1023 for nnpfc_purpose may not be present in the bitstream and may be reserved for future use. Decoders shall ignore an NNPFC SEI message having an nnpfc_purpose in the range of 6 to 1023. A value greater than 1023 for nnpfc_purpose shall not be present in the bitstream and shall not be reserved for future use.

[Table 3]

| Value | Interpretation |
|---|---|
| 0 | It may be used as determined by the application |
| 1 | Visual quality improvement |
| 2 | Chroma upsampling from the 4:2:0 chroma format to the 4:2:2 or 4:4:4 chroma format, or from the 4:2:2 chroma format to the 4:4:4 chroma format |

(continued)

| Value | Interpretation |
|---|---|
| 3 | Increasing the width and height of cropped decoded output picture, without changing the chroma format |
| 4 | Increasing the width and height of cropped decoded output picture and chroma format upsampling |
| 5 | Picture rate upsampling |

When a reserved value of nnpfc_purpose is used in the future, the syntax of this SEI message may be extended to include syntax elements that are present under the condition that nnpfc_purpose is equal to the corresponding value.

When the value of SubWidthC is 1 and the value of SubHeightC is 1, the value of nnpfc_purpose shall not be 2 or 4.

A value of 1 for nnpfc_out_sub_c_flag may indicate that the value of outSubWidthC is 1 and the value of outSubHeightC is 1. A value of 0 for nnpfc_out_sub_c_flag may indicate that the value of outSubWidthC is 2 and the value of outSubHeightC is 1. When nnpfc_out_sub_c_flag is not present, outSubWidthC may be inferred to be equal to SubWidthC, and outSubHeightC may be inferred to be equal to SubHeightC. When the value of ChromaFormatIdc is 2 and nnpfc_out_sub_c_flag is present, the value of nnpfc_out_sub_c_flag shall be equal to 1.

The nnpfc_pic_width_in_luma_samples and nnpfc_pic_height_in_luma_samples may indicate the width and height, respectively, of the luma sample array of a picture resulting from applying the post-processing filter identified by nnpfc_id to the cropped decoded output picture. When nnpfc_pic_width_in_luma_samples and nnpfc_pic_height_in_luma_samples are not present, each may be inferred to be equal to CroppedWidth and CroppedHeight, respectively. The value of nnpfc_pic_width_in_luma_samples shall be in the range from CroppedWidth to CroppedWidth * 16 - 1. The value of nnpfc_pic_height_in_luma_samples shall be in the range from CroppedHeight to CroppedHeight * 16 - 1.

nnpfc_num_input_pics_minus2 + 2 may indicate the number of decoded output pictures used as input to the post-processing filter.

nnpfc_interpolated_pics[i] may represent the number of interpolated pictures generated by the post-processing filter between the i-th picture and the (i + 1)-th picture used as input to the post-processing filter.

A variable numInputPics indicating the number of pictures used by the input of post-processing filter, and a variable numOutputPics indicating the total number of pictures generated as a result of the post-processing filter, may be derived as shown in Table 4.

[Table 4]

```
if( nnpfc_purpose == 5 ) {
    numInputPics = nnpfc_num_input_pics_minus2 + 2
    for( i = 0, numOutputPics = 0; i <= numInputPics − 2; i++ )
        numOutputPics += nnpfc_interpolated_pics[ i ]
} else
    numInputPics = 1
```

A value of 1 for nnpfc_component_last_flag may indicate that the last dimension of the input tensor inputTensor for the post-processing filter and the output tensor outputTensor resulting from the post-processing filter are used for the current channel. A value of 0 for nnpfc_component_last_flag may indicate that the third dimension of the input tensor inputTensor for the post-processing filter and the output tensor outputTensor resulting from the post-processing filter are used for the current channel.

The first dimension of the input tensor and the output tensor may be used as a batch index used in some neural-network frameworks. Although the formula in the semantics of this SEI message uses a batch size corresponding to a batch index of 0, the batch size used as input for neural-network inference may be determined by the implementation of the post-processing.

For example, when the value of nnpfc_inp_order_idc is equal to 3 and the value of nnpfc_auxiliary_inp_idc is equal to 1, the input tensor may include 7 channels, including 4 luma matrices, 2 chroma matrices, and 1 auxiliary input matrix. In this case, the DeriveInputTensors() process may derive each of the 7 channels of the input tensor one by one, and when a specific channel among these channels is being processed, that channel may be referred to as the current channel during the process.

The nnpfc_inp_format_idc may indicate a method of converting the sample value of a cropped decoded output picture into an input value of the post-processing filter. When nnpfc_inp_format_idc is 0, the input value for the post-processing filter is a real number, and the InpY() and InpC() functions may be defined as in Equation 1.

$$[\text{Equation 1}]$$

$$InpY( x ) = x \div ( ( 1 << BitDepthY ) - 1 )$$

$$InpC( x )= x \div ( ( 1 << BitDepthC ) - 1 )$$

When the value of nnpfc_inp_format_idc is 1, the input values for the post-processing filter are unsigned integer numbers, and the InpY() and InpC() functions may be derived as shown in Table 5.

$$[\text{Table 5}]$$

$$
\begin{aligned}
&\text{shiftY} = \text{BitDepth}_Y - \text{inpTensorBitDepth}\\
&\text{if( inpTensorBitDepth} >= \text{BitDepth}_Y)\\
&\quad \text{InpY( x )} = x << ( \text{inpTensorBitDepth} - \text{BitDepth}_Y )\\
&\text{else}\\
&\quad \text{InpY( x )} = \text{Clip3}(0, ( 1 << \text{inpTensorBitDepth} ) - 1, ( x + ( 1 << ( \text{shiftY} - 1 ) ) ) >> \text{shiftY} )\\
\\
&\text{shiftC} = \text{BitDepth}_C - \text{inpTensorBitDepth}\\
&\text{if( inpTensorBitDepth} >= \text{BitDepth}_C )\\
&\quad \text{InpC( x )} = x << ( \text{inpTensorBitDepth} - \text{BitDepth}_C )\\
&\text{else}\\
&\quad \text{InpC( x )} = \text{Clip3}(0, ( 1 << \text{inpTensorBitDepth} ) - 1, ( x + ( 1 << ( \text{shiftC} - 1 ) ) ) >> \text{shiftC} )
\end{aligned}
$$

The variable inpTensorBitDepth may be derived from the syntax element nnpfc_inp_tensor_bitlength_minus8 described below.

A value of nnpfc_inp_format_idc greater than 1 may be reserved for future use and may not be present in the bitstream. Decoders shall ignore an NNPFC SEI message containing reserved values of nnpfc_inp_format_idc.

The value of nnpfc_inp_tensor_bitlength_minus8 + 8 may represent the bit depth of luma sample values in the input integer tensor. The value of inpTensorBitDepth may be derived as shown in Equation 2.

$$[\text{Equation 2}]$$

$$inpTensorBitDepth = nnpfc\_inp\_tensor\_bitdepth\_minus8 + 8$$

The value of nnpfc_inp_tensor_bitlength_minus8 may be restricted to be present in the range of 0 to 24.

The nnpfc_inp_order_idc may indicate a method of arranging the sample array of a cropped decoded output picture as one of the input pictures for the post-processing filter.

The value of nnpfc_inp_order_idc shall be present in the range of 0 to 3 in the bitstream. A value from 4 to 255 for nnpfc_inp_order_idc shall not be present in the bitstream. Decoders shall ignore an NNPFC SEI message having an nnpfc_inp_order_idc in the range of 4 to 255. A value of nnpfc_inp_order_idc greater than 255 is not present in the bitstream and is not reserved for future use.

When the value of ChromaFormatIdc is not 1, the value of nnpfc_inp_order_idc shall not be 3.

Table 6 includes a description of the value of nnpfc_inp_order_idc.

[Table 6]

| nnpfc_inp_order_idc | Description |
| --- | --- |
| 0 | If nnpfc_auxiliary_inp_idc is equal to 0, one luma matrix may be present in the input tensor for each input picture, and the number of channels may be 1. Otherwise when nnpfc_auxiliary_inp_idc is equal to 1, one luma matrix and one auxiliary input matrix may be present, and the number of channels may be 2. |

(continued)

| nnpfc_inp_or-<br>der_idc | Description |
|---|---|
| 1 | If nnpfc_auxiliary_inp_idc is equal to 0, two chroma matrices may be present in the input tensor, and the number of channels may be 2. Otherwise when nnpfc_auxiliary_inp_idc is equal to 1, two chroma matrices and one auxiliary input matrix may be present, and the number of channels may be 3. |
| 2 | If nnpfc_auxiliary_inp_idc is equal to 0, one luma and two chroma matrices may be present in the input tensor, and the number of channels may be 3. Otherwise when nnpfc_auxiliary_inp_idc is equal to 1, one luma matrix, two chroma matrices and one auxiliary input matrix may be present, and the number of channels may be 4. |
| 3 | If nnpfc_auxiliary_inp_idc is equal to 0, four luma matrices and two chroma matrices may be present in the input tensor, and the number of channels may be 6. Otherwise when nnpfc_auxiliary_inp_idc is equal to 1, four luma matrices, two chroma matrices, and one auxiliary input matrix may be present in the input tensor, and the number of channels may be 7. The luma channels may be derived in an interleaved manner as illustrated in FIG. 4. This nnpfc_inp_order idc can only be used when the chroma format is 4:2:0. |
| 4 ... 255 | Reserved |

A patch may be a rectangular array of samples from a component of a picture (e.g., luma or chroma component).

The nnpfc_auxiliary_inp_idc greater than 0 may indicate that auxiliary input data is present in the input tensor of the neural-network post-filter. The value of 0 for nnpfc_auxiliary_inp_idc may indicate that auxiliary input data is not present in the input tensor. The value of 1 for nnpfc_auxiliary_inp_idc may indicate that the auxiliary input data is derived using the method described in Tables 7 to 9.

The value of nnpfc_auxiliary_inp_idc shall exist in the range of 0 to 1 in the bitstream. A value from 2 to 255 for nnpfc_inp_order_idc shall not be present in the bitstream. Decoders shall ignore an NNPFC SEI message having an nnpfc_inp_order_idc value in the range of 2 to 255. A value greater than 255 for nnpfc_inp_order_idc shall not be present in the bitstream and shall not be reserved for future use.

A process DeriveInputTensors() for deriving the input tensor inputTensor for a given vertical sample coordinate cTop and a horizontal sample coordinate cLeft specifying the top-left sample position of a sample patch included in the input tensor may be described as the combination of Tables 7 to 9.

[Table 7]

```
for( i = 0; i < numInputPics; i++ ) {
   if( nnpfc_inp_order_idc == 0 )
      for( yP = −overlapSize; yP < inpPatchHeight + overlapSize; yP++)
         for( xP = −overlapSize; xP < inpPatchWidth + overlapSize; xP++ ) {
            inpVal = InpY( InpSampleVal( cTop + yP, cLeft + xP, CroppedHeight,
               CroppedWidth, CroppedYPic[ i ] ) )
            if( !nnpfc_component_last_flag )
               inputTensor[ 0 ][ i ][ 0 ][ yP + overlapSize ][ xP + overlapSize ] = inpVal
            else
               inputTensor[ 0 ][ i ][ yP + overlapSize ][ xP + overlapSize ][ 0 ] = inpVal
            if( nnpfc_auxiliary_inp_idc == 1 )
               if( !nnpfc_component_last_flag )
                  inputTensor[ 0 ][ i ][ 1 ][ yP + overlapSize ][ xP + overlapSize ] = StrengthControlVal
               else
                  inputTensor[ 0 ][ i ][ yP + overlapSize ][ xP + overlapSize ][ 1 ] = StrengthControlVal
         }
   else if( nnpfc_inp_order_idc == 1 )
      for( yP = −overlapSize; yP < inpPatchHeight + overlapSize; yP++)
         for( xP = −overlapSize; xP < inpPatchWidth + overlapSize; xP++ ) {
            inpCbVal = InpC( InpSampleVal( cTop + yP, cLeft + xP, CroppedHeight / SubHeightC,
               CroppedWidth / SubWidthC, CroppedCbPic[ i ] ) )
            inpCrVal = InpC( InpSampleVal( cTop + yP, cLeft + xP, CroppedHeight / SubHeightC,
               CroppedWidth / SubWidthC, CroppedCrPic[ i ] ) )
            if( !nnpfc_component_last_flag ) {
               inputTensor[ 0 ][ i ][ 0 ][ yP + overlapSize ][ xP + overlapSize ] = inpCbVal
               inputTensor[ 0 ][ i ][ 1 ][ yP + overlapSize ][ xP + overlapSize ] = inpCrVal
            } else {
               inputTensor[ 0 ][ i ][ yP + overlapSize ][ xP + overlapSize ][ 0 ] = inpCbVal
               inputTensor[ 0 ][ i ][ yP + overlapSize ][ xP + overlapSize ][ 1 ] = inpCrVal
            }
            if( nnpfc_auxiliary_inp_idc == 1 )
               if( !nnpfc_component_last_flag )
                  inputTensor[ 0 ][ i ][ 2 ][ yP + overlapSize ][ xP + overlapSize ] = StrengthControlVal
               else
                  inputTensor[ 0 ][ i ][ yP + overlapSize ][ xP + overlapSize ][ 2 ] = StrengthControlVal
         }
```

[Table 8]

```
else if( nnpfc_inp_order_idc == 2 )
  for( yP = −overlapSize; yP < inpPatchHeight + overlapSize; yP++)
    for( xP = −overlapSize; xP < inpPatchWidth + overlapSize; xP++ ) {
      yY = cTop + yP
      xY = cLeft + xP
      yC = yY / SubHeightC
      xC = xY / SubWidthC
      inpYVal = InpY( InpSampleVal( yY, xY, CroppedHeight,
          CroppedWidth, CroppedYPic[ i ] ) )
      inpCbVal = InpC( InpSampleVal( yC, xC, CroppedHeight / SubHeightC,
          CroppedWidth / SubWidthC, CroppedCbPic[ i ] ) )
      inpCrVal = InpC( InpSampleVal( yC, xC, CroppedHeight / SubHeightC,
          CroppedWidth / SubWidthC, CroppedCrPic[ i ] ) )
      if( !nnpfc_component_last_flag ) {
        inputTensor[ 0 ][ i ][ 0 ][ yP + overlapSize ][ xP + overlapSize ] = inpYVal
        inputTensor[ 0 ][ i ][ 1 ][ yP + overlapSize ][ xP + overlapSize ] = inpCbVal
        inputTensor[ 0 ][ i ][ 2 ][ yP + overlapSize ][ xP + overlapSize ] = inpCrVal
      } else {
        inputTensor[ 0 ][ i ][ yP + overlapSize ][ xP + overlapSize ][ 0 ] = inpYVal
        inputTensor[ 0 ][ i ][ yP + overlapSize ][ xP + overlapSize ][ 1 ] = inpCbVal
        inputTensor[ 0 ][ i ][ yP + overlapSize ][ xP + overlapSize ][ 2 ] = inpCrVal
      }
      if( nnpfc_auxiliary_inp_idc == 1 )
        if( !nnpfc_component_last_flag )
          inputTensor[ 0 ][ i ][ 3 ][ yP + overlapSize ][ xP + overlapSize ] = StrengthControlVal
        else
          inputTensor[ 0 ][ i ][ yP + overlapSize ][ xP + overlapSize ][ 3 ] = StrengthControlVal
    }
```

[Table 9]

```
else if( nnpfc_inp_order_idc = = 3 )
   for( yP = −overlapSize; yP < inpPatchHeight + overlapSize; yP++)
      for( xP = −overlapSize; xP < inpPatchWidth + overlapSize; xP++ ) {
         yTL = cTop + yP * 2
         xTL = cLeft + xP * 2
         yBR = yTL + 1
         xBR = xTL + 1
         yC = cTop / 2 + yP
         xC = cLeft / 2 + xP
         inpTLVal = InpY( InpSampleVal( yTL, xTL, CroppedHeight,
            CroppedWidth, CroppedYPic[ i ] ) )
         inpTRVal = InpY( InpSampleVal( yTL, xBR, CroppedHeight,
            CroppedWidth, CroppedYPic[ i ] ) )
         inpBLVal = InpY( InpSampleVal( yBR, xTL, CroppedHeight,
            CroppedWidth, CroppedYPic[ i ] ) )
         inpBRVal = InpY( InpSampleVal( yBR, xBR, CroppedHeight,
            CroppedWidth, CroppedYPic[ i ] ) )
         inpCbVal = InpC( InpSampleVal( yC, xC, CroppedHeight / 2,
            CroppedWidth / 2, CroppedCbPic[ i ] ) )
         inpCrVal = InpC( InpSampleVal( yC, xC, CroppedHeight / 2,
            CroppedWidth / 2, CroppedCrPic[ i ] ) )
         if( !nnpfc_component_last_flag ) {
            inputTensor[ 0 ][ i ][ 0 ][ yP + overlapSize ][ xP + overlapSize ] = inpTLVal
            inputTensor[ 0 ][ i ][ 1 ][ yP + overlapSize ][ xP + overlapSize ] = inpTRVal
            inputTensor[ 0 ][ i ][ 2 ][ yP + overlapSize ][ xP + overlapSize ] = inpBLVal
            inputTensor[ 0 ][ i ][ 3 ][ yP + overlapSize ][ xP + overlapSize ] = inpBRVal
            inputTensor[ 0 ][ i ][ 4 ][ yP + overlapSize ][ xP + overlapSize ] = inpCbVal
            inputTensor[ 0 ][ i ][ 5 ][ yP + overlapSize ][ xP + overlapSize ] = inpCrVal
         } else {
            inputTensor[ 0 ][ i ][ yP + overlapSize ][ xP + overlapSize ][ 0 ] = inpTLVal
            inputTensor[ 0 ][ i ][ yP + overlapSize ][ xP + overlapSize ][ 1 ] = inpTRVal
            inputTensor[ 0 ][ i ][ yP + overlapSize ][ xP + overlapSize ][ 2 ] = inpBLVal
            inputTensor[ 0 ][ i ][ yP + overlapSize ][ xP + overlapSize ][ 3 ] = inpBRVal
            inputTensor[ 0 ][ i ][ yP + overlapSize ][ xP + overlapSize ][ 4 ] = inpCbVal
            inputTensor[ 0 ][ i ][ yP + overlapSize ][ xP + overlapSize ][ 5 ] = inpCrVal
         }
         if( nnpfc_auxiliary_inp_idc = = 1 )
            if( !nnpfc_component_last_flag )
               inputTensor[ 0 ][ i ][ 6 ][ yP + overlapSize ][ xP + overlapSize ] = StrengthControlVal
            else
               inputTensor[ 0 ][ i ][ yP + overlapSize ][ xP + overlapSize ][ 6 ] = StrengthControlVal
      }
   }
```

A value of 1 for nnpfc_separate_colour_description_present_flag may indicate that a unique combination of colour primaries, transform characteristics, and matrix coefficients for the picture resulting from the post-processing filter is specified in the SEI message syntax structure. A value of 0 for nnfpc_separate_colour_description_present_flag may indicate that the combination of colour primaries, transform characteristics, and matrix coefficients for the picture resulting from the post-processing filter is the same as those indicated by the VUI parameters of the CLVS.

The nnpfc_colour_primaries may have the same semantics as the vui_colour_primaries syntax element, except for the following.

- nnpfc_colour_primaries may indicate the colour primaries of the picture resulting from applying the neural-network post-filter specified in the SEI message, rather than the colour primaries used for the CLVS.
- When nnpfc_colour_primaries is not present in the NNPFC SEI message, the value of nnpfc_colour_primaries may be inferred to be equal to the value of vui_colour_primaries.

The nnpfc_transfer_characteristics may have the same semantics as the vui_transfer_characteristics syntax element, except for the following:

- nnpfc_transfer_characteristics may indicate the transfer characteristic of the picture resulting from applying the neural-network post-filter specified in the SEI message, rather than the transfer characteristic used for the CLVS.
- When nnpfc_transfer_characteristics is not present in the NNPFC SEI message, the value of nnpfc_transfer_characteristics may be inferred to be equal to the value of vui_transfer_characteristics.

The nnpfc_matrix_coeffs may have the same semantics as the vui_matrix_coeffs syntax element, except for the following:

- nnpfc_matrix_coeffs may indicate the matrix coefficient of the picture resulting from applying the neural-network post-filter specified in the SEI message, rather than the matrix coefficient used for the CLVS.
- When nnpfc_matrix_coeffs is not present in the NNPFC SEI message, the value of nnpfc_matrix_coeffs may be inferred to be equal to the value of vui_matrix_coeffs.
- The allowable value for nnpfc_matrix_coeffs may not be limited by the chroma format of the decoded video pictures indicated by the value of ChromaFormatIdc in the semantics of the VUI parameters.
- When the value of nnpfc_matrix_coeffs is equal to 0, the value of nnpfc_out_order_idc shall not be equal to 1 or 3.

A value of 0 for nnpfc_out_format_id may indicate that for subsequent post-processing or display, the sample value output by the post-processing filter is a real number whose value range from 0 to 1 is linearly mapped to an unsigned integer value range from 0 to $(1 << \text{bitDepth}) - 1$. A value of 1 for nnpfc_out_format_flag may indicate that the sample value output by the post-processing filter is an unsigned integer in the range of 0 to $(1 << (\text{nnpfc\_out\_tensor\_bitlength\_minus8} + 8)) - 1$. A value of nnpfc_out_format_idc greater than 1 shall not be present in the bitstream. Decoders shall ignore an NNPFC SEI message containing a reserved value of nnpfc_out_format_idc. "+ 8" may indicate the bit depth of a sample value in the output integer tensor. The value of nnpfc_out_tensor_bitlength_minus8 shall be present in the range of 0 to 24.

The nnpfc_out_order_idc may indicate the output order of samples output from the post-processing filter. The value of nnpfc_out_order_idc shall exist in the range of 0 to 3 in the bitstream. A value from 4 to 255 for nnpfc_out_order_idc shall not be present in the bitstream. Decoders shall ignore an NNPFC SEI message having an nnpfc_out_order_idc value in the range of 4 to 255. A value greater than 255 for nnpfc_out_order_idc shall not be present in the bitstream and shall not be reserved for future use. When the value of nnpfc_purpose is 2 or 4, the value of nnpfc_out_order_idc shall not be equal to 3.

Table 10 describes the value of nnpfc_out_order_idc.

[Table 10]

| nnpfc_out_order_idc | Description |
| --- | --- |
| 0 | Only the luma matrix is present in the output tensor, thus the number of channels may be 1. |
| 1 | Only the chroma matrices are present in the output tensor, thus the number of channels may be 2. |
| 2 | The luma and chroma matrices are present in the output tensor, thus the number of channels may be 3. |
| 3 | Four luma matrices and two chroma matrices are present in the output tensor, thus the number of channels may be 6. This nnpfc_out_order_idc can only be used when the chroma format is 4:2:0. |
| 4..255 | Reserved |

A process StoreOutputTensors() for deriving sample values in FilteredYPic, FilteredCbPic, and FilteredCrPic, which are filtered output sample arrays from the output tensor outputTensor, for a given vertical sample coordinate cTop and a horizontal sample coordinate cLeft indicating the top-left sample position of a patch of samples included in the input tensor, may be represented as the combination of Table 11 and Table 12.

[Table 11]

```
for( i = 0; i < numInputPics; i++ ) {
   if( nnpfc_out_order_idc == 0 )
      for( yP = 0; yP < outPatchHeight; yP++)
         for( xP = 0; xP < outPatchWidth; xP++ ) {
            yY = cTop * outPatchHeight / inpPatchHeight + yP
            xY = cLeft * outPatchWidth / inpPatchWidth + xP
            if ( yY < nnpfc_pic_height_in_luma_samples && xY < nnpfc_pic_width_in_luma_samples )
               if( !nnpfc_component_last_flag )
                  FilteredYPic[ i ][ xY ][yY ] = outputTensor[ 0 ][ i ][ 0 ][ yP ][ xP ]
               else
                  FilteredYPic[ i ][ xY ][ yY ] = outputTensor[ 0 ][ i ][ yP ][ xP ][ 0 ]
         }
   else if( nnpfc_out_order_idc == 1 )
      for( yP = 0; yP < outPatchCHeight; yP++)
         for( xP = 0; xP < outPatchCWidth; xP++ ) {
            xSrc = cLeft * horCScaling + xP
            ySrc = cTop * verCScaling + yP
            if ( ySrc < nnpfc_pic_height_in_luma_samples / outSubHeightC &&
                 xSrc < nnpfc_pic_width_in_luma_samples / outSubWidthC )
               if( !nnpfc_component_last_flag ) {
                  FilteredCbPic[ i ][ xSrc ][ ySrc ] = outputTensor[ 0 ][ i ][ 0 ][ yP ][ xP ]
                  FilteredCrPic[ i ][ xSrc ][ ySrc ] = outputTensor[ 0 ][ i ][ 1 ][ yP ][ xP ]
               } else {
                  FilteredCbPic[ i ][ xSrc ][ ySrc ] = outputTensor[ 0 ][ i ][ yP ][ xP ][ 0 ]
                  FilteredCrPic[ i ][ xSrc ][ ySrc ] = outputTensor[ 0 ][ i ][ yP ][ xP ][ 1 ]
               }
         }
   else if( nnpfc_out_order_idc == 2 )
      for( yP = 0; yP < outPatchHeight; yP++)
         for( xP = 0; xP < outPatchWidth; xP++ ) {
            yY = cTop * outPatchHeight / inpPatchHeight + yP
            xY = cLeft * outPatchWidth / inpPatchWidth + xP
            yC = yY / outSubHeightC
            xC = xY / outSubWidthC
            yPc = ( yP / outSubHeightC ) * outSubHeightC
            xPc = ( xP / outSubWidthC ) * outSubWidthC
            if ( yY < nnpfc_pic_height_in_luma_samples && xY < nnpfc_pic_width_in_luma_samples)
               if( !nnpfc_component_last_flag ) {
                  FilteredYPic[ i ][ xY ][ yY ] = outputTensor[ 0 ][ i ][ 0 ][ yP ][ xP ]
                  FilteredCbPic[ i ][ xC ][ yC ] = outputTensor[ 0 ][ i ][ 1 ][ yPc ][ xPc ]
                  FilteredCrPic[ i ][ xC ][ yC ] = outputTensor[ 0 ][ i ][ 2 ][ yPc ][ xPc ]
               } else {
```

[Table 12]

```
          FilteredYPic[ i ][ xY ][ yY ] = outputTensor[ 0 ][ i ][ yP ][ xP ][ 0 ]
          FilteredCbPic[ i ][ xC ][ yC ] = outputTensor[ 0 ][ i ][ yPc ][ xPc ][ 1 ]
          FilteredCrPic[ i ][ xC ][ yC ] = outputTensor[ 0 ][ i ][ yPc ][ xPc ][ 2 ]
        }
      }
  else if( nnpfc_out_order_idc  = =  3 )
    for( yP = 0; yP < outPatchHeight; yP++ )
      for( xP = 0; xP < outPatchWidth; xP++ ) {
        ySrc = cTop / 2 * outPatchHeight / inpPatchHeight + yP
        xSrc = cLeft / 2 * outPatchWidth / inpPatchWidth + xP
        if ( ySrc < nnpfc_pic_height_in_luma_samples / 2  &&
             xSrc < nnpfc_pic_width_in_luma_samples / 2 )
          if( !nnpfc_component_last_flag ) {
            FilteredYPic[ i ][ xSrc * 2 ][ ySrc * 2 ] = outputTensor[ 0 ][ i ][ 0 ][ yP ][ xP ]
            FilteredYPic[ i ][ xSrc * 2 + 1 ][ ySrc * 2 ] = outputTensor[ 0 ][ i ][ 1 ][ yP ][ xP ]
            FilteredYPic[ i ][ xSrc * 2 ][ ySrc * 2 + 1 ] = outputTensor[ 0 ][ i ][ 2 ][ yP ][ xP ]
            FilteredYPic[ i ][ xSrc * 2 + 1][ ySrc * 2 + 1 ] = outputTensor[ 0 ][ i ][ 3 ][ yP ][ xP ]
            FilteredCbPic[ i ][ xSrc ][ ySrc ] = outputTensor[ 0 ][ i ][ 4 ][ yP ][ xP ]
            FilteredCrPic[ i ][ xSrc ][ ySrc ] = outputTensor[ 0 ][ i ][ 5 ][ yP ][ xP ]
          } else {
            FilteredYPic[ i ][ xSrc * 2 ][ ySrc * 2 ] = outputTensor[ 0 ][ i ][ yP ][ xP ][ 0 ]
            FilteredYPic[ i ][ xSrc * 2 + 1 ][ ySrc * 2 ] = outputTensor[ 0 ][ i ][ yP ][ xP ][ 1 ]
            FilteredYPic[ i ][ xSrc * 2 ][ ySrc * 2 + 1 ] = outputTensor[ 0 ][ i ][ yP ][ xP ][ 2 ]
            FilteredYPic[ i ][ xSrc * 2 + 1][ ySrc * 2 + 1 ] = outputTensor[ 0 ][ i ][ yP ][ xP ][ 3 ]
            FilteredCbPic[ i ][ xSrc ][ ySrc ] = outputTensor[ 0 ][ i ][ yP ][ xP ][ 4 ]
            FilteredCrPic[ i ][ xSrc ][ ySrc ] = outputTensor[ 0 ][ i ][ yP ][ xP ][ 5 ]
          }
        }
      }
    }
```

A value of 1 for nnpfc_constant_patch_size_flag may indicate that the post-processing filter accurately accepts the patch size indicated by nnpfc_patch_width_minus1 and nnpfc_patch_height_minus1 as input. A value of 0 for nnpfc_constant_patch_size_flag may indicate that the post-processing filter accepts any patch size that is a positive integer multiple of the patch size indicated by nnpfc_patch_width_minus1 and nnpfc_patch_height_minus1 as input.

nnpfc_patch_width_minus1 + 1 may indicate the number of horizontal samples in the patch size required as input to the post-processing filter when the value of nnpfc_constant_patch_size_flag is 1. The value of nnpfc_patch_width_minus1 shall be present in the range of 0 to Min(32766, CroppedWidth - 1).

nnpfc_patch_height_minus1 + 1 may indicate the number of vertical samples in the patch size required as input to the post-processing filter when the value of nnpfc_constant_patch_size_flag is 1. The value of nnpfc_patch_height_minus1 shall be present in the range of 0 to Min(32766, CroppedHeight - 1).

The variables inpPatchWidth and inpPatchHeight may be set to the width and height of the patch size, respectively.

When the value of nnpfc_constant_patch_size_flag is 0, the following may apply.

- The values of inpPatchWidth and inpPatchHeight may be provided by an external means or set by the post-processor itself.
- The value of inpPatchWidth shall be a positive integer multiple of nnpfc_patch_width_minus1 + 1 and shall be less than or equal to CroppedWidth. The value of inpPatchHeight shall be a positive integer multiple of nnpfc_patch_height_minus1 + 1 and shall be less than or equal to CroppedHeight.

Otherwise (i.e., when the value of nnpfc_constant_patch_size_flag is 1), the value of inpPatchWidth may be set to be equal to nnpfc_patch_width_minus1 + 1, and the value of inpPatchHeight may be set to be equal to nnpfc_patch_height_minus1 + 1.

The nnpfc_overlap may indicate the number of overlapping horizontal and vertical samples of neighboring input tensors of the post-processing filter. The value of nnpfc_overlap shall be present in the range of 0 to 16383.

The variables outPatchWidth, outPatchHeight, horCScaling, verCScaling, outPatchCWidth, outPatchCHeight, and overlapSize may be derived as shown in Table 13.

[Table 13]

| |
|---|
| ioutPatchWidth = ( nnpfc_pic_width_in_luma_samples * inpPatchWidth ) / CroppedWidth<br>outPatchHeight = ( nnpfc_pic_height_in_luma_samples * inpPatchHeight ) / CroppedHeight<br>horCScaling = SubWidthC / outSubWidthC<br>verCScaling = SubHeightC / outSubHeightC<br>outPatchCWidth = outPatchWidth * horCScaling<br>outPatchCHeight = outPatchHeight * verCScaling<br>overlapSize = nnpfc_overlap |

It may be a bitstream conformance requirement that outPatchWidth * CroppedWidth shall be equal to nnpfc_pic_width_in_luma_samples * inpPatchWidth, and outPatchHeight * CroppedHeight shall be equal to nnpfc_pic_height_in_luma_samples * inpPatchHeight.

The nnpfc_padding_type may indicate a padding process when referring to a sample position outside the boundary of the cropped decoded output picture, as described in Table 14. The value of nnpfc_padding_type shall be present in the range of 0 to 15.

[Table 14]

| nnpfc_paddi ng_type | Description |
|---|---|
| 0 | zero padding |
| 1 | replication padding |
| 2 | reflection padding |
| 3 | wrap-around padding |
| 4 | fixed padding |
| 5..15 | Reserved |

The nnpfc_luma_padding_val may indicate a luma value to be used for padding when the value of nnpfc_padding_type is 4.

The nnpfc_cb_padding_val may indicate a Cb value to be used for padding when the value of nnpfc_padding_type is 4.

The nnpfc_cr_padding_val may indicate a Cr value to be used for padding when the value of nnpfc_padding_type is 4.

A function InpSampleVal(y, x, picHeight, picWidth, CroppedPic), where the input includes vertical sample position y, horizontal sample position x, picture height picHeight, picture width picWidth, and a sample array CroppedPic, may return the value of SampleVal derived as shown in Table 15.

For the input to the InpSampleVal() function, the vertical position may be listed before the horizontal position to ensure compatibility with an input tensor convention of some inference engines.

[Table 15]

```
if( nnpfc_padding_type == 0 )
    if( y < 0 || x < 0 || y >= picHeight || x >= picWidth )
        sampleVal = 0
    else
        sampleVal = croppedPic[ x ][ y ]
else if( nnpfc_padding_type == 1 )
    sampleVal = croppedPic[ Clip3( 0, picWidth − 1, x ) ][ Clip3( 0, picHeight − 1, y ) ]
else if( nnpfc_padding_type == 2 )
    sampleVal = croppedPic[ Reflect( picWidth − 1, x ) ][ Reflect( picHeight − 1, y ) ]
else if( nnpfc_padding_type == 3 )
    if( y >= 0 && y < picHeight )
        sampleVal = croppedPic[ Wrap( picWidth − 1, x ) ][ y ]
else if( nnpfc_padding_type == 4 )
    if( y < 0 || x < 0 || y >= picHeight || x >= picWidth )
        sampleVal[ 0 ] = nnpfc_luma_padding_val
        sampleVal[ 1 ] = nnpfc_cb_padding_val
        sampleVal[ 2 ] = nnpfc_cr_padding_val
    else
        sampleVal = croppedPic[ x ][ y ]
```

The process in Table 16 may be used to generate a filtered picture by filtering a cropped decoded output picture in a patch-based manner using the post-processing filter PostProcessingFilter(), and the filtered picture may include a Y sample array FilteredYPic, a Cb sample array FilteredCbPic, and a Cr sample array FilteredCrPic, as indicated by nnpfc_out_order_idc.

[Table 16]

```
if( nnpfc_inp_order_idc == 0 )
    for( cTop = 0; cTop < CroppedHeight; cTop += inpPatchHeight )
        for( cLeft = 0; cLeft < CroppedWidth; cLeft += inpPatchWidth ) {
            DeriveInputTensors( )
            outputTensor = PostProcessingFilter( inputTensor )
            StoreOutputTensors( )
        }
else if( nnpfc_inp_order_idc == 1 )
    for( cTop = 0; cTop < CroppedHeight / SubHeightC; cTop += inpPatchHeight )
        for( cLeft = 0; cLeft < CroppedWidth / SubWidthC; cLeft += inpPatchWidth ) {
            DeriveInputTensors( )
            outputTensor = PostProcessingFilter( inputTensor )
            StoreOutputTensors( )
        }
else if( nnpfc_inp_order_idc == 2 )
    for( cTop = 0; cTop < CroppedHeight; cTop += inpPatchHeight)
        for( cLeft = 0; cLeft < CroppedWidth; cLeft += inpPatchWidth) {
            DeriveInputTensors( )
            outputTensor = PostProcessingFilter( inputTensor )
            StoreOutputTensors( )
        }
else if( nnpfc_inp_order_idc == 3 )
    for( cTop = 0; cTop < CroppedHeight; cTop += inpPatchHeight * 2 )
        for( cLeft = 0; cLeft < CroppedWidth; cLeft += inpPatchWidth * 2 ) {
            DeriveInputTensors( )
            outputTensor = PostProcessingFilter( inputTensor )
            StoreOutputTensors( )
        }
```

A value of 1 for nnpfc_complexity_info_present_flag may indicate that one or more syntax elements indicating the complexity of the post-processing filter associated with nnpfc_id are present. A value of 0 for nnpfc_complexity_info_present_flag may indicate that no syntax element indicating the complexity of the post-processing filter associated with nnpfc_id is present.

A value of 0 for nnpfc_parameter_type_idc may indicate that the neural-network uses only integer parameters. A value of 1 for nnpfc_parameter_type_flag may indicate that the neural-network may use either floating-point or integer parameters. A value of 2 for nnpfc_parameter_type_idc may indicate that the neural-network uses only binary parameters. A value of 3 for nnpfc_parameter_type_idc may be reserved for future use and shall not be present in the bitstream. A decoder shall ignore an NNPFC SEI message with nnpfc_parameter_type_idc value equal to 3.

Values 0, 1, 2, and 3 of nnpfc_log2_parameter_bit_length_minus3 may indicate that the neural-network does not use parameters with bit lengths greater than 8, 16, 32, and 64, respectively. When nnpfc_parameter_type_idc is present and nnpfc_log2_parameter_bit_length_minus3 is not present, the neural-network may not use parameters with a bit length greater than 1.

The nnpfc_num_parameters_idc may indicate the maximum number of neural-network parameters for the post-processing filter in powers of 2048. A value of 0 for nnpfc_num_parameters_idc may indicate that the maximum number of neural-network parameters is unknown. The value of nnpfc_num_parameters_idc shall be present in the range of 0 to 52. A value greater than 52 for nnpfc_num_parameters_idc shall not be present in the bitstream. Decoders shall ignore an NNPFC SEI message having nnpfc_num_parameters_idc value greater than 52.

When the value of nnpfc_num_parameters_idc is greater than 0, a variable maxNumParameters may be derived as shown in Equation 3.

[Equation 3]

$$maxNumParameters = ( 2048 << nnpfc\_num\_parameters\_idc ) - 1$$

The number of neural-network parameters for the post-processing filter may be constrained to be less than or equal to maxNumParameters.

A value of nnpfc_num_kmac_operations_idc greater than 0 may indicate that the maximum number of multiply-accumulate operations per sample for the post-processing filter is less than or equal to nnpfc_num_kmac_operations_idc * 1000. A value of 0 for nnpfc_num_kmac_operations_idc may indicate that the maximum number of multiply-accumulate operations for the network is unknown. The value of nnpfc_num_kmac_operations_idc shall be present in the range of 0 to $2^{32} - 1$.

A value of nnpfc_total_kilobyte_size greater than 0 may indicate the total size (in kilobytes) required to store the uncompressed parameters of the neural-network. The total size in bits may be greater than or equal to the sum of the number of bits used to store each parameter. The nnpfc_total_kilobyte_size may be the result of dividing the total size (in bits) by 8000 and rounding. A value of 0 for nnpfc_total_kilobyte_size may indicate that the total size required to store the parameters for the neural-network is unknown. The value of nnpfc_total_kilobyte_size shall be present in the range of 0 to $2^{32} - 1$.

The nnpfc_reserved_zero_bit_b shall be equal to 0 in the bitstream. A decoder shall ignore an NNPFC SEI message in which nnpfc_reserved_zero_bit_b is not equal to 0.

The nnpfc_payload_byte[i] may include the i-th byte of the bitstream. The byte sequence nnpfc_payload_byte[i] for all existing values of i shall be a complete bitstream conforming to ISO/IEC 15938-17.

**Neural-network post-filter activation (NNFPA)**

The syntax structure for NNFPA is shown in Table 17.

[Table 17]

| nn_post_filter_activation( payloadSize ) { | Descriptor |
|---|---|
|     **nnpfa_target_id** | ue(v) |
|     **nnpfa_cancel_flag** | u(1) |
|     if( !nnpfa_cancel_flag ) { | |
|         **nnpfa_persistence_flag** | u(1) |
|     } | |

The NNPFA syntax structure in Table 17 may be signaled in the form of an SEI message. An SEI message signaling the NNPFA syntax structure in Table 17 may be referred to as an NNPFA SEI message.

The NNPFA SEI message may activate or deactivate the possible use of a target neural-network post-processing filter identified by nnpfa_target_id for post-processing filtering of a picture set.

When a post-processing filter is used for a different purpose or filters a different color component, multiple NNPFA SEI messages may be present for the same picture.

The nnpfa_target_id may indicate a target neural-network post-processing filter associated with the current picture and specified by one or more NNPFC SEI messages having the same nnpfc_id as nnfpa_target_id.

The value of nnpfa_target_id shall be present in the range of 0 to $2^{32} - 2$. A value in the range of 256 to 511 and the range of $2^{31}$ to $2^{32} - 2$ for nnpfa_target_id may be reserved for future use. Decoders shall ignore an NNPFA SEI message with nnpfa_target_id value in the range of 256 to 511 or $2^{31}$ to $2^{32} - 2$.

An NNPFA SEI message with a specific value of nnpfa_target_id shall not be present in the current picture unit (PU) unless one or both of the following conditions are true. Here, a picture unit (PU) may be a set of NAL units including VCL NAL units of a coded picture and associated non-VCL VAL units.

- An NNPFC SEI message having the same nnpfc_id as the specific value of nnpfa_target_id, which is present in a PU preceding the current PU in decoding order, exists within the current CLVS.
- An NNPFC SEI message having the same nnpfc_id as the specific value of nnpfa_target_id for the current PU exists.

When a PU includes both an NNPFC SEI message having a specific value of nnpfc_id and an NNPFA SEI message having an nnpfa_target_id equal to the specific value of nnpfc_id, the NNPFC SEI message shall precede the NNPFA SEI message in decoding order.

A value of 1 for nnpfa_cancel_flag may indicate that the persistence of the target neural-network post-processing filter, set by arbitary previous NNPFA SEI message having the same nnpfa_target_id as the current SEI message, is cancelled. In other words, the target neural-network post-processing filter shall no longer be used unless it is activated by another NNPFA SEI message having the same nnpfa_target_id as the current SEI message and an nnpfa_cancel_flag equal to 0. A value of 0 for nnpfa_cancel_flag may indicate that nnpfa_persistence_flag follows.

The nnpfa_persistence_flag may indicate the persistence of the target neural-network post-processing filter for the current layer. A value of 0 for nnpfa_persistence_flag may indicate that the target neural-network post-processing filter may be used only for post-processing filtering of the current picture. A value of 1 for nnpfa_persistence_flag may indicate that the target neural-network post-processing filter may be used for post-processing filtering of the current picture and all subsequent pictures in the current layer in output order until one or more of the following conditions is true:

- A new CLVS starts for the current layer.
- The bitstream ends.
- A picture in the current layer associated with an NNPFA SEI message having the same nnpfa_target_id as the current SEI message and an nnpfa_cancel_flag equal to 1 is output after the current picture in output order.

The target neural-network post-processing filter shall not be applied to a subsequent picture in the current layer that is associated with an NNPFA SEI message having the same nnpfa_target_id as the current SEI message and an nnpfa_cancel_flag equal to 1.

**Post-filter hint**

The syntax structure for the post-filter hint is shown in Table 18.

[Table 18]

| post_filter_hint( payloadSize ) { | Descriptor |
|---|---|
|   **filter_hint_cancel_flag** | u(1) |
|   if( !filter_hint_cancel_flag ) { | |
|     **filter_hint_persistence_flag** | u(1) |
|     **filter_hint_size_y** | ue(v) |
|     **filter_hint_size_x** | ue(v) |
|     **filter_hint_type** | u(2) |
|     **filter_hint_chroma_coeff_present_flag** | u(1) |
|     for( cIdx = 0; cIdx < ( filter_hint_chroma_coeff_present_flag ? 3 : 1 ); cIdx++ ) | |
|       for( cy = 0; cy < filter_hint_size_y; cy++ ) | |
|         for( cx = 0; cx < filter_hint_size_x; cx++ ) | |
|           **filter_hint_value**[ cIdx ][ cy ][ cx ] | se(v) |
|   } | |
| } | |

The post-filter hint syntax structure in Table 18 may be signaled in the form of an SEI message. An SEI message signaling the post-filter hint syntax structure in Table 18 may be referred to as a post-filter hint SEI message.

The post-filter hint SEI message may provide a post-filter coefficient or correlation information regarding the design of the post-filter, in order to potentially use the decoded and output picture set for post-processing to achieve enhanced display quality.

A value of 1 for !filter_hint_cancel_flag may indicate that the SEI message cancels the persistence of a previous post-filter hint SEI message in output order to be applied to the current layer. A value of 0 for !filter_hint_cancel_flag may indicate that post-filter hint information follows.

The filter_hint_persistence_flag may indicate the persistence of the post-filter hint SEI message for the current layer. A value of 0 for filter_hint_persistence_flag may indicate that the post-filter hint applies only to the currently decoded picture. A value of 1 for filter_hint_persistence_flag may indicate that the post-filter hint SEI message applies to the currently decoded picture and persists for all subsequent pictures in the current layer in output order until one or more of the following conditions is true:

- A new CLVS starts for the current layer.
- The bitstream ends.
- A picture in the current layer of an AU associated with a post-filter hint SEI message is output after the current picture in output order.

The filter_hint_size_y may indicate the vertical size of the filter coefficient or correlation array. The value of filter_hint_size_y shall be present in the range of 1 to 15.

The filter_hint_size_x may indicate the horizontal size of the filter coefficient or correlation array. The value of filter_hint_size_x shall be present in the range of 1 to 15.

The filter_hint_type may indicate the type of the transmitted filter hint, as shown in Table 19. The value of filter_hint_type shall be present in the range of 0 to 2. A value of filter_hint_type equal to 3 shall not be present in the bitstream. Decoders shall ignore a post-filter hint SEI message with filter_hint_type equal to 3.

[Table 19]

| Value | Description |
|---|---|
| 0 | Coefficients of a 2D-FIR filter |
| 1 | Coefficients of 1D-FIR filters |
| 2 | Cross-correlation matrix |

A value of 1 for filter_hint_chroma_coeff_present_flag may indicate that filter coefficients for chroma are present. A value of 0 for filter_hint_chroma_coeff_present_flag may indicate that filter coefficients for chroma are not present.

The filter_hint_value[cIdx][cy][cx] may represent a filter coefficient or a cross-correlation matrix element between the original signal and the decoded signal, with 16-bit precision. The value of filter_hint_value[cIdx] [cy] [cx] shall be present in the range of $-2^{31} + 1$ to $2^{31} - 1$. The variable cIdx may indicate the corresponding color component, cy may indicate the counter in the vertical direction, and cx may indicate the counter in the horizontal direction. Depending on the value of filter_hint_type, the following may apply.

- When the value of filter_hint_type is 0, coefficients of a two-dimensional Finite Impulse Response (FIR) filter of size filter_hint_size_y $\times$ filter_hint_size_x may be transmitted.
- Otherwise, when the value of filter_hint_type is 1, filter coefficients of two one-dimensional FIR filters may be transmitted. In this case, the value of filter_hint_size_y shall be 2. An index cy equal to 0 may indicate the filter coefficients of the horizontal filter, and a cy equal to 1 may indicate the filter coefficient of the vertical filter. In the filtering process, the horizontal filter may be applied first, and the result may then be filtered by the vertical filter.
- Otherwise (i.e., when the value of filter_hint_type is 2), the transmitted hint may represent a cross-correlation matrix between the original signal s and the decoded signal s'.

A normalized cross-correlation matrix for the color component identified by cIdx, with a size of filter_hint_size_y $\times$ filter_hint_size_x, may be defined as in Equation 4.

[Equation 4]

$$\text{filter\_hint\_value}(\text{cIdx}, \text{cy}, \text{cx}) = \frac{1}{(2^{8+\text{bitDepth}} - 1)^2 * h * w} \sum_{m=0}^{h-1} \sum_{n=0}^{w-1} s(m,n) * s'(m+\text{cy}-\text{OffsetY}, n+\text{cx}-\text{OffsetX})$$

In Equation 4, s indicates the sample array of the color component cIdx of the original picture, s' indicates the corresponding array of the decoded picture, h indicates the vertical height of the relevant color component, w indicates the horizontal width of the relevant color component, and bitDepth indicates the bit depth of the color component. In addition, OffsetY is equal to (filter_hint_size_y >> 1), OffsetX is equal to (filter_hint_size_x >> 1), the range of cy is 0 <= cy < filter_hint_size_y, and the range of cx is 0 <= cx < filter_hint_size_x.

A decoder may derive a Wiener post-filter from the cross-correlation matrix between the original signal and the decoded signal and the auto-cross-correlation matrix of the decoded signal.

**Problems of the previous art**

A neural-network post-filter characteristics (NNPFC) SEI message includes a flag, nnpfc_formatting_and_purpose_flag, to control the presence of a syntax element associated with a certain description, which include descriptions related to complexity information, formatting, and purpose of the filter. The presence of the flag is specified as follows:
------------Snippet start------------
**[0189]** When a specific SEI message is the first NNPFC SEI message with a specific nnpfc_id value in the current CLVS in decoding order, the value of nnpfc_formatting_and_purpose_flag shall be 1. On the other hand, when a specific SEI message is not the first NNPFC SEI message with a specific nnpfc_id value in the current CLVS in decoding order, the value of nnpfc_formatting_and_purpose_flag shall be 0.
------------Snippet end------------
**[0190]** The above constraint may specify that signaling of a syntax element for describing formatting, purpose, and complexity is allowed only for an SEI including a base neural-network post-processing filter, while signaling of the same method is not allowed in the case of an update filter. However, as there are at least the following two possibilities, an issue may occur with the meaning of the above-described constraint when signaling of formatting, purpose, and complexity is not present:

1. In the case of an NNPFC message in which the formatting, purpose, and complexity information is not present, the corresponding information is inferred from an NNPFC SEI message including the base neural-network post-processing filter.
2. In the case of an NNPFC message in which the formatting, purpose, and complexity information is not present, the corresponding information is unknown.

When the flag (i.e., nnpfc_formatting_and_purpose_flag) is 0, the meaning of the corresponding message shall be specified in the NNPFC SEI message semantics.

**Embodiment**

The present disclosure proposes an embodiment that may solve the above-described problem.
Meanwhile, in describing the present disclosure, the terms post processing filter, post filter, and post-processing filter may be used as the same meaning. In addition, the following embodiments may be used individually or in combination of two or more.
Hereinafter, the NNPFC refers to the NNPFC syntax structure of Table 1 and Table 2, which may be signaled in the form of an SEI message, in which case the NNPFC may be an NNPFC SEI message. The NNPFA refers to the NNPFA syntax structure of Table 17, which may be signaled in the form of an SEI message, in which case the NNPFA may be an NNPFA SEI message. The post-filter hint refers to the post-filter hint syntax structure of Table 18, which may be signaled in the form of an SEI message, in which case the post-filter hint may be a post-filter hint SEI message.

1. Signaling of formatting and purpose information being present only in an NNPFC SEI message including a base neural-network post-processing filter
2. In an NNPFC SEI message including an update neural-network post-processing filter, the formatting and purpose information being inferred as the same as the information signaled in a related NNPFC SEI message including a base neural-network post-processing filter (i.e., an NNPFC SEI message with the same nnpfc_id)
3. Alternatively, when the formatting and purpose information is not present, information for the corresponding information is designated as unknown or as may be provided externally
4. Alternatively, the following may be applied:

a. In the case of an NNPFC SEI message including a base neural-network post-processing filter, signaling of formatting and purpose information is designated to be present
b. In the case of an NNPFC SEI message including an update neural-network post-processing filter, signaling of formatting and purpose information may be present. In other words, the signaling may be optional, and when the signaling is not present, it is designated to be inferred as the same as what is signaled in a message related to the base filter.

**Embodiment 1**

This embodiment provides a detailed description of items 1 and 2 of the above-described embodiment. This embodiment may be based on a standard (e.g., VVC) document.

The present disclosure proposes the following updates:

**Neural-network post-filter characteristics SEI**

Table 20 below is an example of a modification to a certain element of the NNPFC SEI syntax.

[Table 20]

| nn_post_filter_characteristics( payloadSize ) { | Descriptor |
|---|---|
| nnpfc_id | ue(v) |
| nnpfc_mode_idc | ue(v) |
| if( nnpfc_mode_idc = = 1 ) { | |
| while( !byte_aligned( ) ) | |
| nnpfc_reserved_zero_bit_a | u(1) |
| nnpfc_tag_uri | st(v) |
| nnpfc_uri | st(v) |
| } | |
| nnpfc_formatting_and_purpose_flag | u(1) |
| if( nnpfc_formatting_and_purpose_flag ) { | |
| nnpfc_purpose | ue(v) |
| /* input and output formatting */ | |
| if( nnpfc_purpose = = 2 ‖ nnpfc_purpose = = 4 ) | |
| nnpfc_out_sub_c_flag | u(1) |
| else if( nnpfc_purpose = = 3 ‖ nnpfc_purpose = = 4 ) { | |
| nnpfc_pic_width_in_luma_samples | ue(v) |
| nnpfc_pic_height_in_luma_samples | ue(v) |
| } | |
| else if( nnpfc_purpose = = 5 ) { | |
| nnpfc_num_input_pics_minus2 | ue(v) |
| for( i = 0; i <= nnpfc_num_input_pics_minus2; i++ ) | |
| nnpfc_interpolated_pics[ i ] | ue(v) |
| } | |
| nnpfc_component_last_flag | u(1) |
| nnpfc_inp_format_idc | ue(v) |
| if( nnpfc_inp_format_idc = = 1 ) | |
| nnpfc_inp_tensor_bitdepth_minus8 | ue(v) |
| nnpfc_inp_order_idc | ue(v) |
| nnpfc_auxiliary_inp_idc | ue(v) |
| nnpfc_separate_colour_description_present_flag | u(1) |
| if( nnpfc_separate_colour_description_present_flag ) { | |
| nnpfc_colour_primaries | u(8) |
| nnpfc_transfer_characteristics | u(8) |
| nnpfc_matrix_coeffs | u(8) |
| } | |

(continued)

| | |
|---|---|
| **nnpfc_out_format_idc** | ue(v) |
| if( nnpfc_out_format_idc = = 1 ) | |
| **nnpfc_out_tensor_bitdepth_minus8** | ue(v) |
| **nnpfc_out_order_idc** | ue(v) |
| **nnpfc_constant_patch_size_flag** | u(1) |
| **nnpfc_patch_width_minus1** | ue(v) |
| **nnpfc_patch_height_minus1** | ue(v) |

| | |
|---|---|
| **nnpfc_overlap** | ue(v) |
| **nnpfc_padding_type** | ue(v) |
| if( nnpfc_padding_type = = 4 ) { | |
| **nnpfc_luma_padding_val** | ue(v) |
| **nnpfc_cb_padding_val** | ue(v) |
| **nnpfc_cr_padding_val** | ue(v) |
| } | |
| **nnpfc_complexity_info_present_flag** | ue(v) |
| if( nnpfc_complexity_info_present_flag ) { | |
| **nnpfc_parameter_type_idc** | u(2) |
| if( nnpfc_parameter_type_idc != 2 ) | |
| **nnpfc_log2_parameter_bit_length_minus3** | u(2) |
| **nnpfc_num_parameters_idc** | u(6) |
| **nnpfc_num_kmac_operations_idc** | ue(v) |
| **nnpfc_total_kilobyte_size** | ue(v) |
| } | |
| } | |
| /* ISO/IEC 15938-17 bitstream */ | |
| if( nnpfc_mode_idc = = 0 ) { | |
| while( !byte_aligned( ) ) | |
| **nnpfc_reserved_zero_bit_b** | u(1) |
| for( i = 0; more_data in_payload( ); i++ ) | |
| **nnpfc_payload_byte**[ i ] | b(8) |

| | |
|---|---|
| } | |
| } | |

The following is an example of a modification in semantics related to the above modification.

A neural-network post-filter characteristics (NNPFC) SEI message may specify a neural-network that may be used as a post-processing filter. The use of a post-processing filter specified for a specific filter may be indicated by a neural-network post-filter activation SEI message.

When a specific SEI message is not the first NNPFC SEI message with a specific nnpfc_id value within the current CLVS in decoding order, the post-processing filter PostProcessingFilter( ) may be obtained by applying update information defined by the SEI message to the base post-processing filter.

Note - The update information is not cumulative, and each update may be applied to the base post-processing filter, which is the post-processing filter designated by the first NNPFC SEI message with the specific nnpfc_id value within the current CLVS in decoding order.

**nnpfc_reserved_zero_bit_a** may be restricted to be 0 in a bitstream conforming to the revised version of the document. Decoding apparatus, in other words, a decoder may be restricted to ignore an NNPFC SEI message in which the nnpfc_reserved_zero_bit_a value is not 0.

**nnpfc_tag_uri** may include a tag URI for the syntax and semantics specified in IETF RFC 4151, which identifies the format and associated information about the neural-network used as a base post-processing filter or an update to the base post-processing filter with the same nnpfc_id value specified by nnpfc_uri.

Note - nnpfc_tag_uri may uniquely identify the format of neural-network data specified by nnrpf_uri without required central registration authority.

When nnpfc_tag_uri is "tag:iso.org,2023:15938-17", it may indicate that the neural-network data identified by nnpfc_uri conforms to ISO/IEC 15938-17.

**nnpfc_uri** may include an URI for the syntax and semantics specified in IETF Internet Standard 66, which identifies a neural-network used as a base post-processing filter or an update to the base post-processing filter with the same nnpfc_id value.

When the value of **formatting_and_purpose_flag** is 1, it may be specified that a syntax element related to filter purpose, input formatting, output formatting, and complexity is present. When the value of nnpfc_formatting_and_purpose_flag is 0, it may be specified that a syntax related to filter purpose, input formatting, output formatting, and complexity is not present.

When the SEI message is the first NNPFC SEI message with a specific nnpfc_id value within the current CLVS in decoding order, the value of nnpfc_formatting_and_purpose_flag may be restricted to be 1. On the other hand, when the SEI message is not the first NNPFC SEI message with a specific nnpfc_id value within the current CLVS in decoding order, the value of nnpfc_formatting_and_purpose_flag may be restricted to be 0. When the value of nnpfc_formatting_and_purpose_flag is 0, the values of the syntax elements related to filter purpose, input formatting, output formatting, and complexity may each be inferred as the values of the corresponding syntax elements in an NNPFC SEI message including a neural-network post-processing filter with the same nnpfc_id.

**Embodiment 2**

This embodiment provides a detailed description of items 1 and 2 of the above-described embodiment. This embodiment may be based on a standard (e.g., VVC) document.

The present disclosure proposes the following updates:

**Neural-network post-filter characteristics SEI**

An example of a modification to a certain element of the NNPFC SEI syntax is shown in Table 20 above.

The following is an example of a modification in semantics related to the modification example in Table 20.

A neural-network post-filter characteristics (NNPFC) SEI message may specify a neural-network that may be used as a post-processing filter. The use of a post-processing filter specified for a specific filter may be indicated by a neural-network post-filter activation SEI message.

When a specific SEI message is not the first NNPFC SEI message with a specific nnpfc_id value within the current CLVS in decoding order, the post-processing filter PostProcessingFilter( ) may be obtained by applying update information defined by the SEI message to the base post-processing filter.

Note - The update information is not cumulative, and each update may be applied to the base post-processing filter, which is the post-processing filter specified by the first NNPFC SEI message with the specific nnpfc_id value within the current CLVS in decoding order.

The value of **nnpfc_reserved_zero_bit_a** may be restricted to be 0 in a bitstream conforming to the revised version of the document. Decoding apparatus, in other words, a decoder may be restricted to ignore an NNPFC SEI message in which the nnpfc_reserved_zero_bit_a value is not 0.

**nnpfc_tag_uri** may include a tag URI for the syntax and semantics specified in IETF RFC 4151, which identifies the format and associated information about the neural-network used as a base post-processing filter or an update to the base post-processing filter with the same nnpfc_id value specified by nnpfc_uri.

Note - nnpfc_tag_uri may uniquely identify the format of neural-network data identified by nnrpf_uri without required central registration authority.

When nnpfc_tag_uri is "tag:iso.org,2023:15938-17", it may indicate that the neural-network data identified by nnpfc_uri conforms to ISO/IEC 15938-17.

**nnpfc_uri** may include an URI for the syntax and semantics specified in IETF Internet Standard 66, which identifies a neural-network used as a base post-processing filter or an update to the base post-processing filter with the same nnpfc_id value.

When the value of **formatting_and_purpose_flag** is 1, it may be specified that a syntax element related to filter purpose, input formatting, output formatting, and complexity is present. When the value of nnpfc_formatting_and_purpose_flag is 0, it may be specified that a syntax related to filter purpose, input formatting, output formatting, and complexity is not present.

When the SEI message is an NNPFC SEI message having a specific nnpfc_id value within the current CLVS and including a base neural-network post-processing filter, the value of nnpfc_formatting_and_purpose_flag may be restricted to be 1. On the other hand, when the SEI message is not an NNPFC SEI message having a specific nnpfc_id value within the current CLVS and including a base neural-network post-processing filter, the value of nnpfc_formatting_and_purpose_flag may be restricted to be 0. When the value of nnpfc_formatting_and_purpose_flag is 0, the values of the syntax elements related to filter purpose, input formatting, output formatting, and complexity may each be inferred as the values of the corresponding syntax elements in an NNPFC SEI message including a neural-network post-processing filter with the same nnpfc_id.

### Embodiment 3

This embodiment provides a detailed description of items 1 and 2 of the above-described embodiment. This embodiment may be based on a standard (e.g., VVC) document.

The present disclosure proposes the following updates:

**Neural-network post-filter characteristics SEI**

An example of a modification to certain elements of the NNPFC SEI syntax is shown in Table 20 above.

The following is an example of a modification in semantics related to the modification example in Table 20.

A neural-network post-filter characteristics (NNPFC) SEI message may specify a neural-network that may be used as a post-processing filter. The use of a post-processing filter specified for a specific filter may be indicated by a neural-network post-filter activation SEI message.

When a specific SEI message is not the first NNPFC SEI message with a specific nnpfc_id value within the current CLVS in decoding order, the post-processing filter PostProcessingFilter( ) may be obtained by applying update information defined by the SEI message to the base post-processing filter.

Note - The update information is not cumulative, and each update may be applied to the base post-processing filter, which is the post-processing filter specified by the first NNPFC SEI message with the specific nnpfc_id value within the current CLVS in decoding order.

The value of **nnpfc_reserved_zero_bit_a** may be restricted to be 0 in a bitstream conforming to the revised version of the document. Decoding apparatus, in other words, a decoder may be restricted to ignore an NNPFC SEI message in which the nnpfc_reserved_zero_bit_a value is not 0.

**nnpfc_tag_uri** may include a tag URI for the syntax and semantics specified in IETF RFC 4151, which identifies the format and associated information about the neural-network used as a base post-processing filter or an update to the base post-processing filter with the same nnpfc_id value specified by nnpfc_uri.

Note - nnpfc_tag_uri may uniquely identify the format of neural-network data identified by nnrpf_uri without required central registration authority.

When nnpfc_tag_uri is "tag:iso.org,2023:15938-17", it may indicate that the neural-network data identified by nnpfc_uri conforms to ISO/IEC 15938-17.

**nnpfc_uri** may include an URI for the syntax and semantics specified in IETF Internet Standard 66, which identifies a neural-network used as a base post-processing filter or an update to the base post-processing filter with the same nnpfc_id value.

When the value of **formatting_and_purpose_flag** is 1, it may be specified that a syntax element related to filter purpose, input formatting, output formatting, and complexity is present. When the value of nnpfc_formatting_and_purpose_flag is 0, it may be specified that a syntax related to filter purpose, input formatting, output formatting, and complexity is not present.

When the SEI message is an NNPFC SEI message having a specific nnpfc_id value within the current CLVS and including a base neural-network post-processing filter, the value of nnpfc_formatting_and_purpose_flag may be restricted to be 1. On the other hand, when the SEI message is not an NNPFC SEI message message having a specific nnpfc_id value within the current CLVS and including a base neural-network post-processing filter, the value of nnpfc_formatting_and_purpose_flag may be restricted to be 0. When the value of nnpfc_formatting_and_purpose_flag is 0, the value of the syntax element related to filter purpose, input formatting, output formatting, and complexity may be unknown or may be provided by other external means.

**Embodiment 4**

This embodiment provides a detailed description of items 1 and 2 of the above-described embodiment. This embodiment may be based on a standard (e.g., VVC) document.

The present disclosure proposes the following updates:

**Neural-network post-filter characteristics SEI**

An example of a modification to certain elements of the NNPFC SEI syntax is shown in Table 20 above.

The following is an example of a modification in semantics related to the modification example in Table 20.

A neural-network post-filter characteristics (NNPFC) SEI message may specify a neural-network that may be used as a post-processing filter. The use of a post-processing filter specified for a specific filter may be indicated by a neural-network post-filter activation SEI message.

When a specific SEI message is not the first NNPFC SEI message with a specific nnpfc_id value within the current CLVS in decoding order, the post-processing filter PostProcessingFilter( ) may be obtained by applying update information defined by the SEI message to the base post-processing filter.

Note - The update information is not cumulative, and each update may be applied to the base post-processing filter, which is the post-processing filter specified by the first NNPFC SEI message with the specific nnpfc_id value within the current CLVS in decoding order.

The value of **nnpfc_reserved_zero_bit_a** may be restricted to be 0 in a bitstream conforming to the revised version of the document. Decoding apparatus, in other words, a decoder may be restricted to ignore an NNPFC SEI message in which nnpfc_reserved_zero_bit_a value is not 0.

**nnpfc_tag_uri** may include a tag URI for the syntax and semantics specified in IETF RFC 4151, which identifies the format and associated information about the neural-network used as a base post-processing filter or an update to the base post-processing filter with the same nnpfc_id value specified by nnpfc_uri.

Note - nnpfc_tag_uri may uniquely identify the format of neural-network data identified by nnrpf_uri without required central registration authority.

When nnpfc_tag_uri is "tag:iso.org,2023:15938-17", it may indicate that the neural-network data identified by nnpfc_uri conforms to ISO/IEC 15938-17.

**nnpfc_uri** may include an URI for the syntax and semantics specified in IETF Internet Standard 66, which identifies a neural-network used as a base post-processing filter or an update to the base post-processing filter with the same nnpfc_id value.

When the value of **formatting_and_purpose_flag** is 1, it may be specified that a syntax element related to filter purpose, input formatting, output formatting, and complexity is present. When the value of nnpfc_formatting_and_purpose_flag is 0, it may be specified that a syntax related to filter purpose, input formatting, output formatting, and complexity is not present.

When the SEI message is an NNPFC SEI message having a specific nnpfc_id value within the current CLVS and including a base neural-network post-processing filter, the value of nnpfc_formatting_and_purpose_flag may be restricted to be 1. On the other hand, when the SEI message is not an NNPFC SEI message having a specific nnpfc_id value within the current CLVS and including a base neural-network post-processing filter, the value of nnpfc_formatting_and_purpose_flag may be 0. When the value of nnpfc_formatting_and_purpose_flag is 0, the values of the syntax elements related to filter purpose, input formatting, output formatting, and complexity may each be inferred as the values of the corresponding syntax elements in a preceding NNPFC SEI message having the same nnpfc_id in decoding order.

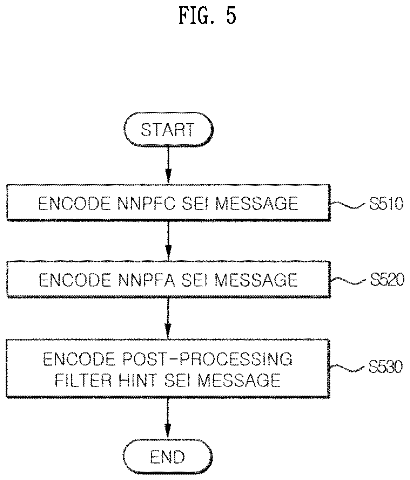

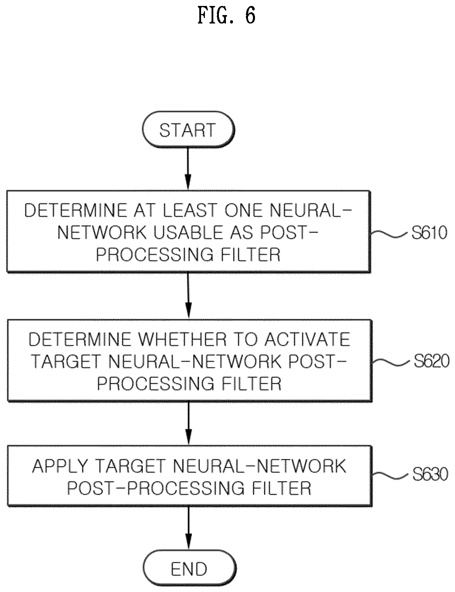

Hereinafter, an image encoding method and an image decoding method according to various embodiments of the present disclosure will be described. The image encoding method of FIG. 5 may be performed by an image encoding apparatus 100, and the image decoding method of FIG. 6 may be performed by an image decoding apparatus 200. In addition, the image encoding and decoding methods of FIG. 5 and FIG. 6 may be based on the embodiments described above.

Referring to FIG. 5, at least one neural-network that may be used as a post-processing filter may be determined, and information about the determined neural-network may be encoded into at least one NNPFC SEI message S510.

Whether to activate the target neural-network post-processing filter applicable to the current picture may be determined, and information about the determined target neural-network post-processing filter may be encoded into an NNPFA SEI message S520. The process S520 for determining the activation of the target neural-network post-processing filter may include a process of determining the target neural-network post-processing filter, a process of determining whether to cancel the persistence of the target neural-network post-processing filter, and a process of determining whether the persistence of the target neural-network post-processing filter is maintained.

Post-processing filter coefficient or correlation information regarding the design of the post-processing filter may be encoded into a post-filter hint SEI message S530. The NNPFC SEI message, NNPFA SEI message, and/or post-filter hint SEI message may be included in an SEI message for a neural-network post-filter (NNFP).

A target neural-network post-processing filter may be determined or specified by various embodiments of the present application when an SEI message for the NNPF is applied to a current picture in an image decoding apparatus.

For example, when an NNPFC SEI message is present, the information that may be present in the message may be determined based on whether the base neural-network post-processing filter is included in the NNPFC SEI. The information present in the NNPFC SEI message may be determined based on whether it has the same value as nnpfc_id. In this case, the NNPFC SEI message including the base neural-network post-processing filter may be the first NNPFC SEI message in decoding order and may have a specific nnpfc_id value within the current CLVS. In addition, the information that may be included in the NNPFC SEI message may include at least one of filter purpose, input formatting, output formatting (collectively referred to as formatting information), and complexity information. In addition, for example, specific information (e.g., formatting information or purpose information, etc) may be encoded and signaled only when the NNPFC SEI message includes a base neural-network post-processing filter. On the other hand, when the NNPFC SEI message includes information for update of a neural-network post-processing filter, that is, an update neural-network post-processing filter, formatting and purpose information may not be encoded and may be inferred, in the decoder, to be the same as specific information (e.g., formatting information or purpose information, etc) included in an NNPFC SEI message including the base neural-network post-processing filter, or may be encoded in a specific manner to be inferred as the same. As another example, when specific information (e.g., formatting information or purpose information, etc) is not present, the information may not be noticed by the decoder, etc. In other words, it may not be explicitly encoded and may be provided through external means. For example, the case in which specific information is not present may include a case where information indicating whether the specific information is present (e.g., nnpfc_formatting_and_purpose_flag, etc) is determined to be a specific value (e.g., 0). In addition, as another example, when the NNPFC SEI message includes a base neural-network post-processing filter, the specific information (e.g., formatting information or purpose information, etc) may necessarily be signaled, and in other cases (e.g., when the NNPFC SEI message includes information for update of the neural-network post-processing filter), it may not be encoded and may be inferred to be the same as the information included in an NNPFC SEI message including the base neural-network post-processing filter, or may be encoded to be inferred as the same. As an example, when the information indicating whether the specific information is present (e.g., nnpfc_formatting_and_purpose_flag, etc) is a specific value (e.g., 0), the specific information may be inferred to be the same value as the value of the corresponding syntax element in a preceding NNPFC SEI message in decoding order with the same nnpfc_id value without being encoded, or may be encoded to be inferred as the same value.

Referring to FIG. 6, the SEI message for the NNPF to be applied to the current picture may be obtained from the bitstream. The SEI message for the NNPF may include an NNPFC SEI message, an NNPFA SEI message, and/or a post-filter hint SEI message.

When the SEI message for the NNPF is applied to the current picture, at least one neural-network that may be used as a post-processing filter may be determined based on at least one NNPFC SEI message included in the SEI message for the NNPF S610.

Based on at least one NNPFA SEI message obtained from the bitstream, whether to activate the target neural-network post-processing filter applicable to the current picture may be determined S620. The process S620 for determining the activation of the target neural-network post-processing filter may include a process of determining the target neural-network post-processing filter, a process of determining whether to cancel the persistence of the target neural-network post-processing filter, and a process of determining whether the persistence of the target neural-network post-processing filter is maintained.

When a target neural-network post-processing filter is activated, the target neural-network post-processing filter may be applied to the current picture S630.

Various embodiments of the present disclosure may be used to determine or specify the target neural-network post-processing filter.

For example, when an NNPFC SEI message is present, the information that may be present in the message may be determined based on whether a base neural-network post-processing filter is included in the NNPFC SEI message. In other words, the information present in the NNPFC SEI message may be determined based on whether it has the same value as nnpfc_id. In this case, the NNPFC SEI message including the base neural-network post-processing filter may be the first NNPFC SEI message in decoding order and may have a specific nnpfc_id value within the current CLVS. In addition, the information that may be included in the NNPFC SEI message may include at least one of filter purpose, input formatting, output formatting (collectively referred to as formatting information), and complexity information. In addition, for example, specific information (e.g., formatting information or purpose information, etc) may be signaled only when the NNPFC SEI message includes a base neural-network post-processing filter. On the other hand, when the NNPFC SEI message includes information for update of a neural-network post-processing filter, that is, an update neural-network post-processing filter, formatting and purpose information may be inferred to be the same as specific information (e.g., formatting information or purpose information, etc) included in an NNPFC SEI message including the base neural-network post-processing filter. As another example, when specific information (e.g., formatting information or purpose information, etc) is not present, the information may not be known, may not be decoded, or may be provided through external means. For example, the case in which specific information is not present may include a case where information indicating whether the specific information is present (e.g., nnpfc_formatting_and_purpose_flag, etc) is a specific value (e.g., 0). In addition, as another example, when the NNPFC SEI message includes a base neural-network post-processing filter, the specific information (e.g., formatting information or purpose information, etc) may necessarily be signaled, and in other cases (e.g., when the NNPFC SEI message includes information for update of the neural-network post-processing filter), the information may be inferred to be the same as the information included in an NNPFC SEI message including the base neural-network post-processing filter. As an example, when the information indicating whether the specific information (e.g., nnpfc_formatting_and_purpose_flag, etc) is present is a specific value (e.g., 0), the specific information may be inferred to be the same value as the corresponding syntax element in a preceding NNPFC SEI message in decoding order with the same nnpfc_id value.

According to the present disclosure, the meaning of the NNPFC SEI message may be clearly defined to improve coding efficiency.

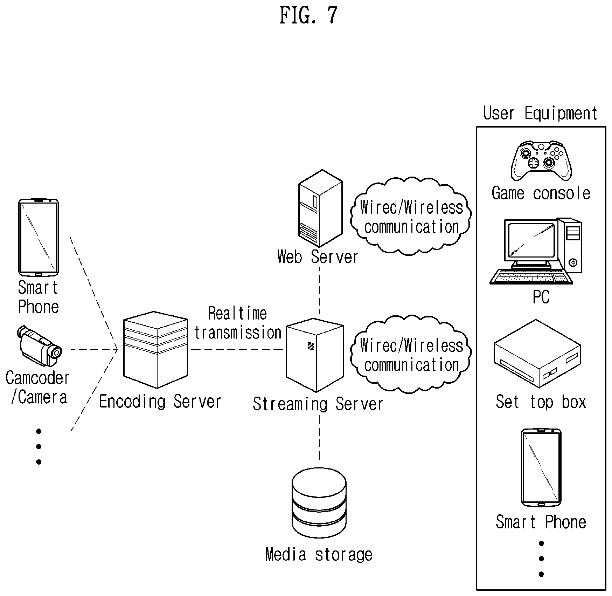

FIG. 7 shows an exemplary diagram of a content streaming system to which an embodiment of the present disclosure may be applied.

As shown in FIG. 7, the content streaming system to which an embodiment of the present disclosure is applied may broadly include an encoding server, a streaming server, a web server, a media storage, a user device, and a multimedia input device.

The encoding server compresses content input from multimedia input devices such as a smartphone, camera, or camcorder into digital data, generating a bitstream and transmitting it to the streaming server. As another example, when multimedia input devices such as a smartphone, camera, or camcorder directly generate a bitstream, the encoding server may be omitted.

The bitstream may be generated by the video encoding method and/or the image encoding apparatus to which an embodiment of the present disclosure is applied, and the streaming server may temporarily store the bitstream during the process of transmitting or receiving the bitstream.

The streaming server may transmit multimedia data to a user device based on a user request through the web server, and the web server may serve as an intermediary that informs user of available service. When a user requests a desired service from the web server, the web server may send the request to the streaming server, and the streaming server may transmit the multimedia data to the user. In this case, the content streaming system may include a separate control server, and in this case, a control server may function to control command/response exchanges between devices within the content streaming system.

The streaming server may receive content from a media storage and/or an encoding server. For example, when receiving content from the encoding server, the content may be received in real time. In this case, to provide a seamless streaming service, the streaming server may store the bitstream for a certain period of time.

Examples of the user device may include a mobile phone, a smartphone, a laptop computer, a digital broadcasting terminal, a personal digital assistant (PDA), a portable multimedia player (PMP), a navigation device, a slate PC, a tablet PC, an ultrabook, a wearable device (i.e., a smartwatch, a smart glass, a head-mounted display (HMD)), a digital TV, a desktop computer, and digital signage.

Each server within the content streaming system may be operated as a distributed server, in which case the data received by each server may be processed in a distributed manner.

The range of the present disclosure includes software or machine-executable instructions (i.e., an operating system, an application, firmware, a program, etc.) that enable operations according to the methods of various embodiments to be executed on a device or computer, and a non-transitory computer-readable medium in which such software or instructions are stored and executable on a device or computer.

[Industrial Applicability]

The embodiments of the present disclosure may be used for encoding/decoding an image.

**Claims**

1. An image decoding method performed by an image decoding apparatus, comprising:

   obtaining a supplemental enhancement information (SEI) message for a neural-network post-filter (NNPF) to be applied to a current picture;
   based on the SEI message for the NNPF being applied to the current picture, determining at least one neural-network usable as a post-processing filter based on at least one neural-network post-filter characteristics (NNPFC) SEI message included in the SEI message for the NNPF; and

determining whether to activate a target neural-network post-processing filter applicable to the current picture, based on at least one neural-network post-filter activation (NNPFA) SEI message included in the SEI message for the NNPF,

wherein formatting information and purpose information included in the NNPFC SEI message is determined based on the NNPFC SEI message including a base neural-network post-processing filter.

2. An image encoding method performed by an image encoding apparatus, comprising:

encoding at least one neural-network usable as a post-processing filter into at least one neural-network post-filter characteristics (NNPFC) supplemental enhancement information (SEI) message; and

encoding whether to activate a target neural-network post-processing filter applicable to a current picture into at least one neural-network post-filter activation (NNPFA) SEI message,

wherein, based on an SEI message for a neural-network post-filter (NNPF) being applied to a current picture in an image decoding apparatus, formatting information and purpose information included in the NNPFC SEI message is determined based on the NNPFC SEI message including a base neural-network post-processing filter.

3. A method for transmitting a bitstream generated by an image encoding method,
the image encoding method comprising:

encoding at least one neural-network usable as a post-processing filter into at least one neural-network post-filter characteristics (NNPFC) supplemental enhancement information (SEI) message; and

encoding whether to activate a target neural-network post-processing filter applicable to a current picture into at least one neural-network post-filter activation (NNPFA) SEI message,

wherein, based on an SEI message for a neural-network post-filter (NNPF) being applied to a current picture at an image decoding apparatus, formatting information and purpose information included in the NNPFC SEI message is determined based on the NNPFC SEI message including a base neural-network post-processing filter.

4. A computer readable recording medium storing a bitstream generated by an image encoding method,
the image encoding method comprising:

encoding at least one neural-network usable as a post-processing filter into at least one neural-network post-filter characteristics (NNPFC) supplemental enhancement information (SEI) message; and

encoding whether to activate a target neural-network post-processing filter applicable to a current picture into at least one neural-network post-filter activation (NNPFA) SEI message,

wherein, based on an SEI message for a neural-network post-filter (NNPF) being applied to a current picture at an image decoding apparatus, formatting information and purpose information included in the NNPFC SEI message is determined based on the NNPFC SEI message including a base neural-network post-processing filter.

# FIG.1

# FIG.2

EP 4 622 271 A1

# FIG.3

EP 4 622 271 A1

FIG.4

FIG. 5

```
        ┌─────────┐
        │  START  │
        └────┬────┘
             │
             ▼
┌───────────────────────────────┐
│  ENCODE NNPFC SEI MESSAGE      │────  S510
└───────────────┬───────────────┘
                │
                ▼
┌───────────────────────────────┐
│  ENCODE NNPFA SEI MESSAGE      │────  S520
└───────────────┬───────────────┘
                │
                ▼
┌───────────────────────────────┐
│    ENCODE POST-PROCESSING      │────  S530
│   FILTER HINT SEI MESSAGE      │
└───────────────┬───────────────┘
                │
                ▼
          ┌─────────┐
          │   END   │
          └─────────┘
```

# FIG. 6

START

DETERMINE AT LEAST ONE NEURAL-
NETWORK USABLE AS POST-
PROCESSING FILTER — S610

DETERMINE WHETHER TO ACTIVATE
TARGET NEURAL-NETWORK POST-
PROCESSING FILTER — S620

APPLY TARGET NEURAL-NETWORK
POST-PROCESSING FILTER — S630

END

# FIG. 7

## INTERNATIONAL SEARCH REPORT

International application No.

**PCT/KR2023/018676**

### A. CLASSIFICATION OF SUBJECT MATTER

**H04N 19/85**(2014.01)i; **H04N 19/70**(2014.01)i; **H04N 19/184**(2014.01)i; **G06N 3/04**(2006.01)i

According to International Patent Classification (IPC) or to both national classification and IPC

### B. FIELDS SEARCHED

Minimum documentation searched (classification system followed by classification symbols)

H04N 19/85(2014.01); H04N 19/105(2014.01); H04N 19/117(2014.01); H04N 19/119(2014.01); H04N 19/132(2014.01); H04N 19/152(2014.01); H04N 19/30(2014.01); H04N 19/50(2014.01); H04N 19/70(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 신경망(neural network), 보충 향상 정보(supplemental enhancement information, SEI), 메시지(message), 필터(filter)

### C. DOCUMENTS CONSIDERED TO BE RELEVANT

| Category* | Citation of document, with indication, where appropriate, of the relevant passages | Relevant to claim No. |
|---|---|---|
| Y | MCCARTHY, Sean et al. AHG9: Specification text for use of Rec. ITU-T T.35 syntax structure to specify a neural network in the neural-network post filter characteristics SEI message. JVET-AB0266-v2, Joint Video Experts Team (JVET) of ITU-T SG 16 WP 3 and ISO/IEC JTC 1/SC 29, 28th Meeting. Mainz, DE. pp. 1-15, 22 October 2022. See pages 1-4. | 1-4 |
| Y | US 2021-0099710 A1 (LG ELECTRONICS INC.) 01 April 2021 (2021-04-01) See paragraphs [0115]-[0116] and [0154]; and claim 1. | 1-4 |
| A | KR 10-1789370 B1 (QUALCOMM INCORPORATED) 23 October 2017 (2017-10-23) See paragraphs [0087] and [0164]-[0166]. | 1-4 |
| A | KR 10-2021-0034536 A (ELECTRONICS AND TELECOMMUNICATIONS RESEARCH INSTITUTE et al.) 30 March 2021 (2021-03-30) See claims 1-10. | 1-4 |

☑ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **21 February 2024** | **21 February 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2023/018676** |

### C. DOCUMENTS CONSIDERED TO BE RELEVANT

| Category* | Citation of document, with indication, where appropriate, of the relevant passages | Relevant to claim No. |
|---|---|---|
| A | KR 10-1132386 B1 (NOKIA CORPORATION) 16 July 2012 (2012-07-16)<br>See claims 11-15. | 1-4 |

Form PCT/ISA/210 (second sheet) (July 2022)

**INTERNATIONAL SEARCH REPORT**
Information on patent family members

International application No.

**PCT/KR2023/018676**

| Patent document cited in search report | | | Publication date (day/month/year) | Patent family member(s) | | | Publication date (day/month/year) |
|---|---|---|---|---|---|---|---|
| US | 2021-0099710 | A1 | 01 April 2021 | US | 11265549 | B2 | 01 March 2022 |
| | | | | WO | 2019-194460 | A1 | 10 October 2019 |
| KR | 10-1789370 | B1 | 23 October 2017 | CN | 104380747 | A | 25 February 2015 |
| | | | | CN | 104380747 | B | 13 February 2018 |
| | | | | EP | 2842320 | A1 | 04 March 2015 |
| | | | | EP | 2842320 | B1 | 05 June 2019 |
| | | | | JP | 2015-515239 | A | 21 May 2015 |
| | | | | JP | 6117341 | B2 | 19 April 2017 |
| | | | | KR | 10-2015-0008143 | A | 21 January 2015 |
| | | | | US | 2013-0294499 | A1 | 07 November 2013 |
| | | | | US | 9516308 | B2 | 06 December 2016 |
| | | | | WO | 2013-163563 | A1 | 31 October 2013 |
| KR | 10-2021-0034536 | A | 30 March 2021 | CN | 113875249 | A | 31 December 2021 |
| | | | | US | 2022-0239933 | A1 | 28 July 2022 |
| | | | | WO | 2021-054811 | A1 | 25 March 2021 |
| KR | 10-1132386 | B1 | 16 July 2012 | CN | 101682760 | A | 24 March 2010 |
| | | | | CN | 101682760 | B | 21 August 2013 |
| | | | | EP | 2153658 | A1 | 17 February 2010 |
| | | | | EP | 2153658 | B1 | 14 August 2013 |
| | | | | KR | 10-2010-0005124 | A | 13 January 2010 |
| | | | | US | 2011-0002397 | A1 | 06 January 2011 |
| | | | | US | 8938012 | B2 | 20 January 2015 |
| | | | | WO | 2008-125900 | A1 | 23 October 2008 |

Form PCT/ISA/210 (patent family annex) (July 2022)